(19) Europäisches Patentamt
European Patent Office
Office européen des brevets

(11) EP 3 626 796 A1

(12) **EUROPEAN PATENT APPLICATION**
published in accordance with Art. 153(4) EPC

(43) Date of publication:
**25.03.2020 Bulletin 2020/13**

(21) Application number: **18801781.8**

(22) Date of filing: **16.05.2018**

(51) Int Cl.:
***C09J 183/07*** *(2006.01)* ***B32B 27/00*** *(2006.01)*
***C08G 77/20*** *(2006.01)* ***C09J 5/06*** *(2006.01)*
***C09J 11/06*** *(2006.01)*

(86) International application number:
**PCT/JP2018/018998**

(87) International publication number:
**WO 2018/212257 (22.11.2018 Gazette 2018/47)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **17.05.2017 JP 2017098511**
**17.05.2017 JP 2017098513**

(71) Applicant: **Daicel Corporation**
**Osaka-shi, Osaka 530-0011 (JP)**

(72) Inventors:
- **SHIBAMOTO, Akihiro**
**Himeji-shi**
**Hyogo 671-1283 (JP)**
- **MAETANI, Shinji**
**Himeji-shi**
**Hyogo 671-1283 (JP)**
- **NISHIDA, Kazuhiro**
**Himeji-shi**
**Hyogo 671-1283 (JP)**
- **USA, Daisuke**
**Amagasaki-shi**
**Hyogo 661-0964 (JP)**
- **YAMAKAWA, Akira**
**Himeji-shi**
**Hyogo 671-1283 (JP)**
- **TSUJI, Naoko**
**Himeji-shi**
**Hyogo 671-1283 (JP)**

(74) Representative: **Grünecker Patent- und Rechtsanwälte**
**PartG mbB**
**Leopoldstraße 4**
**80802 München (DE)**

# (54) ADHESIVE COMPOSITION, CURED PRODUCT, LAMINATE, AND DEVICE

(57) Provided is an adhesive composition that can be cured at low temperatures and can form a cured product having excellent insulating property, heat resistance, and adhesiveness. The adhesive composition according to the present invention includes polyorganosilsesquioxane (A) including a constituent unit represented by Formula (1) below, $R^1SiO_{3/2}$ (1), in Formula (1), $R^1$ represents a group containing a radically polymerizable group. In the polyorganosilsesquioxane (A), a proportion of the constituent unit represented by Formula (1) and a constituent unit represented by the following Formula (2), relative to a total amount (100 mol%) of siloxane constituent units, is from 55 to 100 mol%, $R^1SiO_{2/2}(OR^2)$ (2), in Formula (2), $R^1$ is as defined above, and $R^2$ is a hydrogen atom or an alkyl group having from 1 to 4 carbons. The polyorganosilsesquioxane (A) has a number average molecular weight from 1500 to 50000 and a molecular weight dispersity (weight average molecular weight/number average molecular weight) from 1.0 to 4.0.

EP 3 626 796 A1

## Description

### Technical Field

The present invention relates to an adhesive composition, a cured product thereof, a laminate formed using the adhesive composition, and a device including the laminate. The present application claims priority to JP 2017-098511 and JP 2017-098513, both filed on 17 May 2017, the entire contents of which are incorporated by reference herein.

### Background Art

Thermosetting adhesives containing benzocyclobutene (BCB), novolac epoxy resins, or polyorganosilsesquioxane have been known as adhesives used for stacking semiconductors and bonding electronic components (see, for example, Patent Documents 1 and 2).

However, heating at an elevated temperature of about 200 to 350°C is necessary to cure a thermosetting adhesive containing BCB, and the adherend may be damaged by exposure to such high temperature. Furthermore, when a thermosetting adhesive containing novolac epoxy resins is subjected to processing at an elevated temperature (for example, 260 to 280°C), such as a lead free solder reflow, decomposition of the adhesive may occur and thus outgas may be generated. This causes a problem of deterioration in adhesion.

Furthermore, there is a problem in that crack formation or peeling in an adhesive layer in a laminate formed by stacking substrates including wiring, due to a thermal shock, etc., causes peeling off of the substrate or breakage of the wiring, and thus, causes failure of a device including the laminate.

### Citation List

### Patent Document

Patent Document 1: JP 2009-279840 A
Patent Document 2: JP 2010-226060 A

### Summary of Invention

### Technical Problem

Therefore, an object of the present invention is to provide an adhesive composition (adhesive) that can be cured at low temperatures and can form a cured product having excellent insulating property, heat resistance, and adhesiveness.

Another object of the present invention is to provide an adhesive composition (adhesive) that can be cured at low temperatures and can form a cured product having excellent insulating property, heat resistance, crack resistance (or thermal shock resistance), and adhesiveness.

In addition, another object of the present invention is to provide a cured product of the adhesive composition.

Furthermore, another object of the present invention is to provide a laminate produced by bonding substrates with the adhesive composition, and a device including the laminate.

### Solution to Problem

As a result of diligent research to solve the problems described above, the present inventors discovered that an adhesive composition including polyorganosilsesquioxane including a silsesquioxane constituent unit (unit structure) containing a radically polymerizable group and having a certain number average molecular weight and a certain molecular weight dispersity can be cured at low temperatures and can form a cured product having excellent insulating property, heat resistance, and adhesiveness. Further, the present inventors discovered that the adhesive composition further including a certain silane compound containing a radically polymerizable group can form a cured product having an excellent crack resistance (or thermal shock resistance) and the adhesive composition according to the present invention can be suitably used for stacking semiconductors, or bonding electronic components and the like. The present invention has been completed based on these findings.

Specifically, the present invention provides an adhesive composition, including polyorganosilsesquioxane (A) including a siloxane constituent unit. In the adhesive composition, the siloxane constituent unit includes at least a

constituent unit represented by Formula (1),

$R^1SiO_{3/2}$ (1)

in Formula (1), $R^1$ represents a group containing a radically polymerizable group;
a proportion of the constituent unit represented by Formula (1) and a constituent unit represented by Formula (2), relative to a total amount (100 mol%) of siloxane constituent units included in the polyorganosilsesquioxane (A), is 55 to 100 mol%,

$R^1SiO_{2/2}(OR^2)$ (2)

in Formula (2), $R^1$ is as defined above, and $R^2$ is a hydrogen atom or an alkyl group having from 1 to 4 carbons; and the polyorganosilsesquioxane (A) has a number average molecular weight from 1500 to 50000 and a molecular weight dispersity (weight average molecular weight/number average molecular weight) from 1.0 to 4.0.

The present invention further provides the adhesive composition in which the polyorganosilsesquioxane (A) further includes a constituent unit represented by Formula (1-1),

$R^3SiO_{3/2}$ (1-1)

in Formula (1-1), $R^3$ is a substituted or unsubstituted aryl group, a substituted or unsubstituted aralkyl group, a substituted or unsubstituted cycloalkyl group, a substituted or unsubstituted alkyl group, or a substituted or unsubstituted alkenyl group.

The present invention further provides the adhesive composition in which the radically polymerizable group is a (meth)acryloyloxy group.

The present invention further provides the adhesive composition further including a radically polymerizable compound (B) other than the polyorganosilsesquioxane (A).

The present invention further provides the adhesive composition further including a radical polymerization initiator (C).

The present invention further provides the adhesive composition further including a silane coupling agent (D) represented by Formula (d),

[Chem. 1]

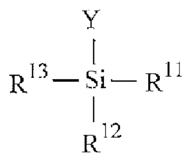

(d)

in Formula (d), $R^{11}$ to $R^{13}$ are the same or different and each represent an OR group or an R group, and at least one of $R^{11}$ to $R^{13}$ is an OR group, where, R is a monovalent hydrocarbon group optionally having a substituent; and Y is a group containing a radically polymerizable group.

The present invention further provides the adhesive composition including a thermal radical polymerization initiator as the radical polymerization initiator (C) and further including from 0.1 to 10.0 parts by weight of an antioxidant (E) relative to 1 part by weight of the thermal radical polymerization initiator.

The present invention further provides the adhesive composition including a thermal radical polymerization initiator as the radical polymerization initiator (C) and further including from 0.05 to 1.0 parts by weight of a chain transfer agent (F) relative to 1 part by weight of the thermal radical polymerization initiator.

The present invention further provides a cured product of the adhesive composition.

The present invention further provides a method of producing a cured product including subjecting the adhesive composition to a heat treatment in which a curing temperature is changed stepwise. In the method, a degree of cure at the end of a first stage of the heat treatment is equal to or less than 85%, and a degree of cure is greater than 85% after a second or later stage of the heat treatment.

The present invention further provides a substrate with an adhesive layer, the adhesive layer being formed on the substrate and formed from a solidified product of the adhesive composition.

The present invention further provides a laminate having a structure in which two or more substrates are stacked with a cured product of the adhesive composition interposed therebetween.

The present invention further provides a device including the laminate.

## Advantageous Effects of Invention

When a thermoset adhesive that needs to be heated at an elevated temperature is used, an adherend may be damaged by the heat. However, the adhesive composition according to the present invention can be cured at a low temperature and form a cured product having excellent heat resistance and adhesiveness. Furthermore, the resulting cured product exhibits an excellent insulating property. Furthermore, when the adhesive composition according to the present invention is used in combination with a certain silane compound containing a radically polymerizable group, a cured product further having excellent crack resistance can be formed.
Therefore, the adhesive composition according to the present invention is suitable for use in bonding components for electronic materials requiring insulation.
Furthermore, the laminate produced by using the adhesive composition according to the present invention is not damaged due to heating, and cracking or peeling does not occur in the adhesive layer even when thermal shock is applied to the laminate. Therefore, the device including the laminate is highly reliable.

## Brief Description of Drawings

FIG. 1 is a $^1H$-NMR chart of acryloyl group-containing polyorganosilsesquioxane (1) obtained in Production Example 1.
FIG. 2 is a $^{29}Si$-NMR chart of the acryloyl group-containing polyorganosilsesquioxane (1) obtained in Production Example 1.
FIG. 3 is a $^1H$-NMR chart of acryloyl group-containing polyorganosilsesquioxane (2) obtained in Production Example 2.
FIG. 4 is a $^{29}Si$-NMR chart of the acryloyl group-containing polyorganosilsesquioxane (2) obtained in Production Example 2.
FIG. 5 is an explanatory diagram (schematic diagram of results of thermogravimetric analysis) illustrating a method for evaluating heat resistance of a cured product.

## Description of Embodiments

### Adhesive Composition

The adhesive composition according to an embodiment of the present invention includes polyorganosilsesquioxane (A) including a siloxane constituent unit, in which
the siloxane constituent unit includes at least a constituent unit represented by Formula (1),

$$R^1SiO_{3/2} \qquad (1)$$

in Formula (1), $R^1$ represents a group containing a radically polymerizable group;
a proportion of the constituent unit represented by Formula (1) and a constituent unit represented by Formula (2), relative to a total amount (100 mol%) of siloxane constituent units included in the polyorganosilsesquioxane (A), is 55 to 100 mol%,

$$R^1SiO_{2/2}(OR^2) \qquad (2)$$

in Formula (2), $R^1$ is as defined above, and $R^2$ is a hydrogen atom or an alkyl group having from 1 to 4 carbons; and
the polyorganosilsesquioxane (A) has a number average molecular weight from 1500 to 50000 and a molecular weight dispersity (weight average molecular weight/number average molecular weight) from 1.0 to 4.0.
The adhesive composition according to an embodiment of the present invention may further include a radically polymerizable compound (B) other than the polyorganosilsesquioxane (A), a thermal radical polymerization initiator (C), a silane coupling agent (D), an antioxidant (E), a chain transfer agent (F), etc.

### Polyorganosilsesquioxane (A)

The polyorganosilsesquioxane (A) in an embodiment of the present invention includes a backbone formed by siloxane constituent units. The siloxane constituent unit includes at least a constituent unit represented by Formula (1),

$R^1SiO_{3/2}$ (1)

in Formula (1), $R^1$ represents a group containing a radically polymerizable group.

The constituent unit represented by Formula (1) above is a silsesquioxane constituent unit (what is called a T unit) generally represented by $RSiO_{3/2}$, specifically, a T3 form. Here, R in the above formula represents a hydrogen atom or a monovalent organic group and the same applies hereinafter. The constituent unit represented by Formula (1) above is formed by hydrolysis and condensation reactions of a corresponding hydrolyzable trifunctional silane compound (for example, a compound represented by Formula (a) described later).

In Formula (1), $R^1$ represents a group containing a radically polymerizable group (monovalent group). Thus, the polyorganosilsesquioxane (A) in an embodiment of the present invention is a polymerizable compound containing at least a radically polymerizable group in the molecule.

Examples of the radically polymerizable group include a vinyl group, a vinyl ether group, and a (meth)acryloyloxy group. From the perspective of curability of the adhesive composition and the insulating property, heat resistance, and crack resistance of the resulting cured product, a (meth)acryloyloxy group is particularly preferable.

The polyorganosilsesquioxane (A) may include only one type of constituent unit represented by Formula (1) above or may include two or more types of constituent units represented by Formula (1) above.

In addition to the constituent unit represented by Formula (1) above, the polyorganosilsesquioxane (A) may also include, as the silsesquioxane constituent unit $RSiO_{3/2}$, a constituent unit represented by Formula (1-1) or (1-2) below.

$R^3SiO_{3/2}$ (1-1)

$HSiO_{3/2}$ (1-2)

The constituent unit represented by Formulas (1-1) or (1-2) above is formed by hydrolysis and condensation reactions of a corresponding hydrolyzable trifunctional silane compound (for example, a compound represented by Formula (b) or (c) described later).

$R^3$ in Formula (1-1) represents a substituted or unsubstituted aryl group, a substituted or unsubstituted aralkyl group, a substituted or unsubstituted cycloalkyl group, a substituted or unsubstituted alkyl group, or a substituted or unsubstituted alkenyl group. Examples of the aryl group include a phenyl group, a tolyl group, and a naphthyl group. Examples of the aralkyl group include a benzyl group and a phenethyl group. Examples of the cycloalkyl group include a cyclobutyl group, a cyclopentyl group, and a cyclohexyl group. Examples of the alkyl group include linear or branched alkyl groups, such as a methyl group, an ethyl group, a propyl group, an isopropyl group, an n-butyl group, an isobutyl group, an s-butyl group, a t-butyl group, and an isopentyl group. Examples of the alkenyl group include linear or branched alkenyl groups, such as a vinyl group, an allyl group, and an isopropenyl group.

Examples of the substituted aryl group, the substituted aralkyl group, the substituted cycloalkyl group, the substituted alkyl group, and the substituted alkenyl group described above include a group in which some or all of hydrogen atoms or a portion of or the whole backbone in each of the aryl group, the aralkyl group, the cycloalkyl group, the alkyl group, and the alkenyl group described above are substituted with at least one type selected from the group consisting of an ether group, an ester group, a carbonyl group, a siloxane group, a halogen atom (such as a fluorine atom), a mercapto group, an amino group, and a hydroxy group (hydroxyl group).

Among them, $R^3$ is preferably a substituted or unsubstituted aryl group, a substituted or unsubstituted alkyl group, a substituted or unsubstituted alkenyl group, more preferably a substituted or unsubstituted aryl group, and even more preferably a phenyl group.

The polyorganosilsesquioxane (A) may further contain, as a T unit, a silsesquioxane constituent unit generally represented by $RSiO_{2/2}(OR)$ (T2 form). Examples of the T2 form include constituent units represented by Formulas (2), (2-1), and (2-2) below. $R^1$ and $R^3$ in the formulas below are as defined above. $R^2$ represents a hydrogen atom or an alkyl group having 1 to 4 carbons. The constituent units represented by the following Formulas (2), (2-1), and (2-2) are each formed by hydrolysis and condensation reactions of a corresponding hydrolyzable trifunctional silane compound.

$R^1SiO_{2/2}(OR^2)$ (2)

$R^3SiO_{2/2}(OR^2)$ (2-1)

$HSiO_{2/2}(OR^2)$ (2-2)

Examples of the alkyl group having from 1 to 4 carbons include linear or branched alkyl groups, such as a methyl group, an ethyl group, a propyl group, an isopropyl group, a n-butyl group, an isobutyl group, an s-butyl group,

and a t-butyl group.

The proportion of each of the above-described silsesquioxane constituent units (T unit) in the polyorganosilsesquioxane (A) can be appropriately controlled depending on the composition of the raw materials (hydrolyzable trifunctional silanes) for forming these constituent units.

The polyorganosilsesquioxane (A) may further include, in addition to T units, at least one siloxane constituent unit selected from the group consisting of a constituent unit represented by $R_3SiO_{1/2}$ (what is called an M unit), a constituent unit represented by $R_2SiO_{2/2}$ (what is called a D unit), and a constituent unit represented by $SiO_{4/2}$ (what is called a Q unit).

In the polyorganosilsesquioxane (A), a molar ratio of constituent units (T3 forms) represented by Formula (I) below to constituent units (T2 forms) represented by Formula (II) below [constituent units represented by Formula (I)/constituent units represented by the formula (II) (molar ratio); the molar ratio may be referred to as "T3 form/T2 form"] is, for example, from 5 to 500 and the lower limit of the molar ratio is preferably 10. The upper limit of the molar ratio is preferably 100, and more preferably 50. When [T3 form/T2 form] is controlled within the aforementioned range, miscibility with components of the adhesive composition other than the polyorganosilsesquioxane (A) is improved and handleability is improved.

$$R^aSiO_{3/2} \qquad (I)$$

$$R^bSiO_{2/2}(OR^c) \qquad (II)$$

$R^a$ and $R^b$ in the formulas above are the same or different, and each represent a group containing a radically polymerizable group, a substituted or unsubstituted aryl group, a substituted or unsubstituted aralkyl group, a substituted or unsubstituted cycloalkyl group, a substituted or unsubstituted alkyl group, or a substituted or unsubstituted alkenyl group. Examples of these groups include groups described in relation to $R^1$ and $R^3$.

In the formula above, $R^c$ represents a hydrogen atom or an alkyl group having from 1 to 4 carbons, examples of which include groups described in relation to $R^2$.

The constituent unit represented by Formula (I) above is represented by Formula (I') below in more detail. Furthermore, the constituent unit represented by Formula (II) above is represented by Formula (II') below in more detail. Three oxygen atoms bonded to the silicon atom illustrated in the structure represented by Formula (I') below are each bonded to another silicon atom (a silicon atom not illustrated in Formula (I')). On the other hand, two oxygen atoms located above and below the silicon atom illustrated in the structure represented by Formula (II') below are each bonded to another silicon atom (a silicon atom not illustrated in Formula (II')).

[Chem. 2]

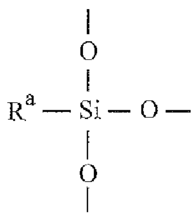

(I')

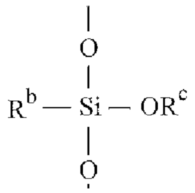

(II')

[T3 form/T2 form] in the polyorganosilsesquioxane (A) can be determined, for example, by $^{29}$Si-NMR spectrum measurement. In the $^{29}$Si-NMR spectrum, the silicon atom in the constituent unit represented by Formula (I) above (T3 form) and the silicon atom in the constituent unit represented by Formula (II) above (T2 form) exhibit signals (peaks) at different positions (chemical shifts), and thus [T3 form/T2 form] is determined by calculating the integration ratio of the respective peaks.

The $^{29}$Si-NMR spectrum of the polyorganosilsesquioxane (A) can be measured, for example, with the following instrument and conditions.

Measuring instrument: Trade name "JNM-ECA500NMR" (available from JEOL Ltd.)
Solvent: Deuteriochloroform
Cumulative number: 1800 times
Measurement temperature: 25°C

When [T3 form/T2 form] of the polyorganosilsesquioxane (A) is 5 to 500, the amount of T2 forms is relatively smaller than the amount of the T3 forms. This means that the hydrolysis and condensation reactions of the silanol is more advanced.

The silsesquioxane structure of the polyorganosilsesquioxane (A) may be any one of a cage-type structure, an incomplete cage-type structure, a ladder-type structure, a random structure, or a combination of two or more types of these silsesquioxane structures.

The proportion (total proportion) of the constituent units represented by Formula (1) above and the constituent units represented by Formula (2) above, relative to a total amount of siloxane constituent units in the polyorganosilsesquioxane (A) [all siloxane constituent units; total amount of M units, D units, T units, and Q units] (100 mol%), is 55 to 100 mol%, preferably from 65 to 100 mol%, and more preferably from 80 to 99 mol%. When that proportion is 55 mol% or greater, it is possible to improve the curability of the adhesive composition and significantly increase the insulating property, heat resistance, crack resistance, and adhesiveness of the cured product. In addition, the proportion of each siloxane constituent unit in the polyorganosilsesquioxane (A) can be calculated, for example, based on a raw material composition or NMR spectrum measurement.

The proportion (total proportion) of the constituent units represented by Formula (1-1) above and the constituent units represented by Formula (2-1) above, relative to a total amount of siloxane constituent units in the polyorganosilsesquioxane (A) [all siloxane constituent units; total amount of M units, D units, T units, and Q units] (100 mol%), is not particularly limited, and is preferably from 0 to 70 mol%, more preferably from 0 to 60 mol%, even more preferably from 0 to 40 mol%, and particularly preferably from 1 to 15 mol%. When that proportion is 70 mol% or less, the polyorganosilsesquioxane (A) includes relatively large amounts of the constituent units represented by Formula (1) and the constituent units represented by Formula (2). As a result, the curability of the adhesive composition tends to be improved and the insulating property, heat resistance, crack resistance, and adhesiveness of the cured product tend to be further improved. On the other hand, when that proportion is 1 mol% or greater, gas barrier property of the cured product tends to be improved.

The proportion (total proportion) of the constituent units represented by Formula (1) above, the constituent units represented by Formula (2) above, the constituent units represented by Formula (1-1) above, and the constituent units represented by Formula (2-1) above, relative to a total amount of siloxane constituent units in the polyorganosilsesquioxane (A) [all siloxane constituent units; total amount of M units, D units, T units, and Q units] (100 mol%), is not particularly limited, and is preferably from 60 to 100 mol%, more preferably from 70 to 100 mol%, and even more preferably from 80 to 100 mol%. When that proportion is 60 mol% or greater, the insulating property, heat resistance, crack resistance, and adhesiveness of the cured product tend to be improved.

The number average molecular weight (Mn) of the polyorganosilsesquioxane (A) in terms of standard polystyrene determined by gel permeation chromatography is from 1500 to 50000, preferably from 2000 to 10000, more preferably from 2000 to 8000, and even more preferably from 2000 to 7000. The polyorganosilsesquioxane (A) with a number average molecular weight of 1500 or higher further improves the insulating property, heat resistance, crack resistance, and adhesiveness of the cured product. On the other hand, the polyorganosilsesquioxane (A) with a number average molecular weight of 50000 or lower improves miscibility with other components in the adhesive composition and improves the insulating property, heat resistance, and crack resistance of the cured product.

The molecular weight dispersity (Mw/Mn) of the polyorganosilsesquioxane (A) in terms of standard polystyrene determined by gel permeation chromatography is from 1.0 to 4.0, preferably from 1.1 to 3.0, and more preferably from 1.2 to 2.7. The polyorganosilsesquioxane (A) with a molecular weight dispersity of 4.0 or less further improves the heat resistance, crack resistance, and adhesiveness of the cured product. On the other hand, the polyorganosilsesquioxane (A) with a molecular weight dispersity of 1.0 or greater tends to easily become liquid and improve the handleability.

The number average molecular weight and the molecular weight dispersity of the polyorganosilsesquioxane (A) can be measured with the following instruments and conditions.

Measuring instrument: Trade name "LC-20AD" (available from Shimadzu Corporation)
Column:

Shodex GPC KF-801 (available from SHOWA DENKO K.K.) × 2
Shodex GPC KF-802 (available from SHOWA DENKO K.K.) × 1
Shodex GPC KF-803 (available from SHOWA DENKO K.K.) × 1
Measurement temperature: 40°C

Eluent: THF, sample concentration, 0.1 to 0.2 wt.%
Flow rate: 1 mL/min
Detector: UV-VIS detector (trade name "SPD-20A", available from Shimadzu Corporation)
Molecular weight: in terms of standard polystyrene

Since the polyorganosilsesquioxane (A) has a structure as described above, specifically, since [T3 form/T2 form] is from 5 to 500, the number average molecular weight is from 1500 to 50000, and the molecular weight dispersity is from 1.0 to 4.0, the cured product of the polyorganosilsesquioxane (A) exhibits excellent heat resistance. The 5% weight loss temperature ($T_{d5}$) of the cured product of the polyorganosilsesquioxane (A) in an air atmosphere is, for example, 330°C or higher (for example, from 330 to 450°C), preferably 340°C or higher, and even more preferably 350°C or higher.

Here, the 5% weight loss temperature is a temperature at which 5% of the weight before heating has lost when heating at a constant temperature increase rate, and is an indicator of heat resistance. The 5% weight loss temperature can be measured by thermogravimetric analysis (TGA) under conditions of a temperature increase rate of 5°C/min in air atmosphere.

The polyorganosilsesquioxane (A) can be produced by a well known or commonly used method for producing a polysiloxane, and, for example, can be produced by a method of hydrolysis and condensation of one type or two or more types of hydrolyzable silane compounds, but not limited thereto.

More specifically, for example, the polyorganosilsesquioxane (A) can be produced by a method of hydrolysis and condensation of a compound represented by Formula (a) below, which is a hydrolyzable silane compound for forming a silsesquioxane constituent unit (T unit) in the polyorganosilsesquioxane (A), and additionally as necessary a compound represented by Formula (b) below and a compound represented by Formula (c) below.

$$R^1Si(X^1)_3 \quad (a)$$

$$R^3Si(X^2)_3 \quad (b)$$

$$HSi(X^3)_3 \quad (c)$$

In the above formulas, $R^1$ and $R^3$ are the same as $R^1$ and $R^3$ in Formulas (1) and (1-1) above. $X^1$, $X^2$, and $X^3$ are the same or different and each represent an alkoxy group or a halogen atom. Examples of the alkoxy group include alkoxy groups having from 1 to 4 carbons, such as a methoxy group, an ethoxy group, a propoxy group, an isopropyloxy group, a butoxy group, and an isobutyloxy group. Examples of the halogen atom include a fluorine atom, a chlorine atom, a bromine atom, and an iodine atom. In particular, $X^1$, $X^2$, and $X^3$ are each preferably an alkoxy group, and more preferably a methoxy group and an ethoxy group.

A hydrolyzable silane compound other than the compounds represented by Formulas (a) to (c) above may be used in combination as the hydrolyzable silane compound. Examples thereof include hydrolyzable trifunctional silane compounds other than the compounds represented by Formulas (a) to (c) above, hydrolyzable monofunctional silane compounds forming an M unit, hydrolysable bifunctional silane compounds forming a D unit, and hydrolysable tetrafunctional silane compounds forming a Q unit.

The used amount and the composition of the hydrolyzable silane compounds can be appropriately set according to a desired structure of the polyorganosilsesquioxane (A). For example, the used amount of the compound represented by Formula (a) above is not particularly limited but is preferably from 55 to 100 mol%, more preferably from 65 to 100 mol%, and even more preferably from 80 to 99 mol%, relative to a total amount (100 mol%) of the hydrolyzable silane compounds used.

In addition, the used amount of the compound represented by Formula (b) above is not particularly limited and is preferably from 0 to 70 mol%, more preferably from 0 to 60 mol%, even more preferably from 0 to 40 mol%, and particularly preferably from 1 to 15 mol%, relative to a total amount (100 mol%) of the hydrolyzable silane compounds used.

Furthermore, the proportion (total proportion) of the compound represented by Formula (a) and the compound represented by Formula (b), relative to a total amount (100 mol%) of the hydrolysable silane compounds used, is not particularly limited and preferably from 60 to 100 mol%, more preferably from 70 to 100 mol%, and even more preferably from 80 to 100 mol%.

In addition, in a case where two or more types of the hydrolyzable silane compounds are used in combination, hydrolysis and condensation reactions of these hydrolyzable silane compounds can be performed simultaneously or sequentially. The order of the reactions when performed sequentially is not particularly limited.

The hydrolysis and condensation reactions of the hydrolyzable silane compound may be performed in a single stage or may be performed in two or more stages. For example, to efficiently produce a polyorganosilsesquioxane in which [T3 form/T2 form] is not less than 5 and less than 20, the hydrolysis and condensation reactions are preferably

performed in a single stage.

On the other hand, to efficiently produce a polyorganosilsesquioxane in which [T3 form/T2 form] is not less than 20, the hydrolysis and condensation reactions are preferably performed in two or more stages (preferably two stages). In this case, in the first stage of the hydrolysis and condensation reactions, a polyorganosilsesquioxane of which number average molecular weight is 1000 to 3000 and [T3 form/T2 form] is not less than 5 and less than 20 is preferably produced. Then, the resulting polyorganosilsesquioxane is preferably further subjected to the second stage of the hydrolysis and condensation reactions.

The first stage of the hydrolysis and condensation reactions can be performed in the presence or absence of a solvent. In particular, the first stage of the hydrolysis and condensation reactions is preferably performed in the presence of a solvent. Examples of the solvent include aromatic hydrocarbons, such as benzene, toluene, xylene, and ethylbenzene; ethers, such as diethyl ether, dimethoxyethane, tetrahydrofuran, and dioxane; ketones, such as acetone, methyl ethyl ketone, and methyl isobutyl ketone; esters, such as methyl acetate, ethyl acetate, isopropyl acetate, and butyl acetate; amides, such as N,N-dimethylformamide and N,N-dimethylacetamide; nitriles, such as acetonitrile, propionitrile, and benzonitrile; and alcohols, such as methanol, ethanol, isopropyl alcohol, and butanol. Among them, the solvent preferably contain at least a ketone or an ether. Note that one type of the solvent can be used alone, or two or more types thereof can be used in combination.

The amount of the solvent used at the first stage of the hydrolysis and condensation reactions is not particularly limited and can be appropriately set, depending on a desired reaction time, etc., in a range from 0 to 2000 parts by weight if a total amount of the hydrolyzable silane compounds is regarded as 100 parts by weight.

The hydrolysis and condensation reactions at the first stage are preferably performed in the presence of a catalyst and water. Examples of the catalyst include acid catalysts and alkaline catalysts. Examples of the acid catalyst include mineral acids, such as hydrochloric acid, sulfuric acid, nitric acid, phosphoric acid, and boric acid; phosphate esters; carboxylic acids, such as acetic acid, formic acid, and trifluoroacetic acid; sulfonic acids, such as methanesulfonic acid, trifluoromethanesulfonic acid, and p-toluenesulfonic acid; solid acids, such as activated clay; and Lewis acids, such as iron chloride. Examples of the alkali catalyst include alkali metal hydroxides, such as lithium hydroxide, sodium hydroxide, potassium hydroxide, and cesium hydroxide; alkaline earth metal hydroxides, such as magnesium hydroxide, calcium hydroxide, and barium hydroxide; alkali metal carbonates, such as lithium carbonate, sodium carbonate, potassium carbonate, and cesium carbonate; alkaline earth metal carbonates, such as magnesium carbonate; alkali metal hydrogencarbonates, such as lithium hydrogencarbonate, sodium hydrogencarbonate, potassium hydrogencarbonate, and cesium hydrogencarbonate; alkali metal organic acid salts (for example, acetates), such as lithium acetate, sodium acetate, potassium acetate, and cesium acetate; alkaline earth metal organic acid salts (for example, acetates), such as magnesium acetate; alkali metal alkoxides, such as lithium methoxide, sodium methoxide, sodium ethoxide, sodium isopropoxide, potassium ethoxide, and potassium t-butoxide; alkali metal phenoxides, such as sodium phenoxide; amines (tertiary amines etc.), such as triethylamine, N-methylpiperidine, 1,8-diazabicyclo[5.4.0]undec-7-ene, and 1,5-diazabicyclo[4.3.0]non-5-ene; and nitrogen-containing heterocyclic aromatic compounds, such as pyridine, 2,2'-bipyridyl, and 1,10-phenanthroline. Here, one type of the catalyst can be used alone, or two or more types of the catalysts can be used in combination. In addition, the catalyst can be used in a state of being dissolved or dispersed in water, a solvent, or the like. In particular, the catalyst preferably is an alkali catalyst because of its excellent handleability.

The amount of the catalyst used at the first stage of the hydrolysis and condensation reactions is not particularly limited and can be appropriately set in a range from 0.002 to 0.200 mol if the total amount of the hydrolyzable silane compounds is 1 mol.

The amount of water used at the first stage of the hydrolysis and condensation reactions is not particularly limited and can be appropriately set in a range from 0.5 to 20 mol if the total amount of the hydrolyzable silane compounds is 1 mol.

A method for adding water in the first stage of the hydrolysis and condensation reactions is not particularly limited, and a total amount of water to be used may be added at once or may be added sequentially. When water is added sequentially, it may be added continuously or intermittently.

The reaction temperatures in the first stage of the hydrolysis and condensation reactions are not particularly limited but are preferably from 40 to 100°C and more preferably from 45 to 80°C. In addition, the reaction time in the first stage of the hydrolysis and condensation reactions are not particularly limited and are preferably from 0.1 to 10 hours and more preferably from 1.5 to 8 hours. Furthermore, the hydrolysis and condensation reactions at the first stage can be performed under normal pressure or can be performed under increased pressure or reduced pressure. Furthermore, an atmosphere for the first stage of the hydrolysis and condensation reactions is not particularly limited. For example, the first stage of the hydrolysis and condensation reactions may be performed in an inert gas atmosphere, such as a nitrogen atmosphere and an argon atmosphere, or in the presence of oxygen, such as in the air. However, the first stage of the hydrolysis and condensation reactions is preferably performed in an inert gas atmosphere.

In the first stage of the hydrolysis and condensation reactions, a polyorganosilsesquioxane in which [T3 form/T2 form] is not less than 5 and less than 20 can be produced. After completion of the first stage of the hydrolysis and

condensation reactions, the catalyst is preferably neutralized. The reaction product may be subjected to separation and purification treatments by using any one of separation techniques, for example, water washing, acid washing, alkali washing, filtration, concentration, distillation, extraction, crystallization, recrystallization, or column chromatography, or a combination of these separation techniques.

The polyorganosilsesquioxane which is produced in the first stage of the hydrolysis and condensation reactions and of which [T3 form/T2 form] is not less than 5 and less than 20 can be subjected to the second stage of the hydrolysis and condensation reactions to produce a polyorganosilsesquioxane of which [T3 form/T2 form] is not less than 20.

The second stage of the hydrolysis and condensation reactions can be performed in the presence or absence of a solvent. When the second stage of the hydrolysis and condensation reactions is performed in the presence of a solvent, examples of the solvent that can be used include the solvents that can be used in the first stage of the hydrolysis and condensation reactions. The polyorganosilsesquioxane of which [T3 form/T2 form] is not less than 5 and less than 20 and which includes the reaction solvent, extraction solvent, or the like for the first stage of the hydrolysis and condensation reactions may be, directly or after partial distillation, subjected to the second stage of the hydrolysis and condensation reactions. Note that, one type of the solvent can be used alone, or two or more types of the solvents can be used in combination.

When a solvent is used in the hydrolysis and condensation reactions at the second stage, the used amount of the solvent is not particularly limited and may be appropriately set, depending on the desired reaction time, etc., in the range of 0 to 2000 parts by weight relative to 100 parts by weight of the polyorganosilsesquioxane of which [T3 form/T2 form] is not less than 5 and less than 20.

The hydrolysis and condensation reactions at the second stage are preferably performed in the presence of a catalyst and water. Examples of the catalyst include the catalysts that can be used in the first stage of the hydrolysis and condensation reactions. Among them, alkali catalysts are preferable, and alkali metal hydroxides such as sodium hydroxide, potassium hydroxide, and cesium hydroxide; and alkali metal carbonates such as lithium carbonate, sodium carbonate, potassium carbonate, and cesium carbonate are more preferable. Here, one type of the catalyst can be used alone, or two or more types of the catalysts can be used in combination. In addition, the catalyst can be used in a state of being dissolved or dispersed in water, a solvent, or the like.

The amount of the catalyst used in the second stage of the hydrolysis and condensation reactions is not particularly limited, and can be appropriately set in a preferable range from 0.01 to 10000 ppm, or a more preferable range from 0.1 to 1000 ppm, relative to the polyorganosilsesquioxane of which [T3 form/T2 form] is not less than 5 and less than 20 (1000000 ppm).

The amount of water used in the second stage of the hydrolysis and condensation reactions is not particularly limited, and can be appropriately set in a preferable range from 10 to 100000 ppm, or a more preferable range from 100 to 20000 ppm relative to the polyorganosilsesquioxane of which [T3 form/T2 form] is not less than 5 and less than 20 (1000000 ppm). In a case where the amount of water used is greater than 100000 ppm, controlling [T3 form/T2 form] or the number average molecular weight of the polyorganosilsesquioxane (A) in a manner to fall within the predetermined range tends to be difficult.

A method for adding water in the second stage of the hydrolysis and condensation reactions is not particularly limited, and a total amount of water to be used may be added at once or may be added sequentially. When water is added sequentially, it may be added continuously or intermittently.

The reaction temperature of the second stage of the hydrolysis and condensation reactions varies depending on the catalyst used. The reaction temperature is not particularly limited and preferably from 5 to 200°C and more preferably from 30 to 100°C. When the reaction temperature is controlled to fall within the above range, [T3 form/T2 form] and the number average molecular weight tend to be more efficiently controlled to fall within the predetermined range. In addition, the reaction time of the hydrolysis and condensation reactions at the second stage is not particularly limited and preferably from 0.5 to 1000 hours and more preferably from 1 to 500 hours.

The hydrolysis and condensation reactions at the second stage can be performed under normal pressure or can be performed under increased pressure or reduced pressure. Furthermore, an atmosphere for the second stage of the hydrolysis and condensation reactions is not particularly limited. For example, the second stage of the hydrolysis and condensation reactions may be performed in an inert gas atmosphere, such as a nitrogen atmosphere and an argon atmosphere, or in the presence of oxygen, such as in the air. However, the second stage of the hydrolysis and condensation reactions is preferably performed in an inert gas atmosphere.

In the second stage of the hydrolysis and condensation reactions, a polyorganosilsesquioxane in which [T3 form/T2 form] is not less than 20 can be produced. After completion of the second stage of the hydrolysis and condensation reactions, the catalyst is preferably neutralized. The reaction product may be subjected to separation and purification treatments by using any one of separation techniques, for example, water washing, acid washing, alkali washing, filtration, concentration, distillation, extraction, crystallization, recrystallization, or column chromatography, or a combination of these separation techniques.

Since the polyorganosilsesquioxane (A) has the structure described above, the adhesive composition including

the polyorganosilsesquioxane (A) as an essential component can be cured at a low temperature and form a cured product having excellent insulating property, heat resistance, crack resistance (or thermal shock resistance) and adhesiveness.

In the adhesive composition according to an embodiment of the present invention, one type of the polyorganosilsesquioxane (A) can be used alone, or two or more types of the polyorganosilsesquioxane (A) can be used in combination.

The content (blended amount) of the polymerizable compounds (among them, the radically polymerizable compounds) in the adhesive composition according to an embodiment of the present invention is not particularly limited and is preferably not less than 70 and less than 100 wt.%, more preferably from 80 to 99.8 wt.%, and even more preferably from 90 to 99.5 wt.%, relative to the total amount of nonvolatile components (100 wt.%) in the adhesive composition. When the content of the polymerizable compound is not less than 70 wt.%, the insulating property, heat resistance, crack resistance, and adhesiveness of the cured product tend to be further enhanced. Furthermore, when the content of the polymerizable compound is less than 100 wt.% and a curing catalyst is contained, it is possible to allow the curing of the adhesive composition to more efficiently proceed.

The content (blended amount) of the polyorganosilsesquioxane (A) in the adhesive composition according to an embodiment of the present invention is not particularly limited and is preferably not less than 40 wt.%, particularly preferably not less than 45 wt.%, and most preferably not less than 50 wt.%, relative to the total amount of nonvolatile components (100 wt.%) in the adhesive composition. The upper limit of the content is, for example, about 96 wt.%. When the polyorganosilsesquioxane (A) is contained in the adhesive composition in the above-described range, the heat resistance of the resulting cured product tends to be improved.

The proportion of the polyorganosilsesquioxane (A) relative to a total amount (100 wt.%) of polymerizable compounds included in the adhesive composition according to an embodiment of the present invention is not particularly limited, and is preferably from 30 to 100 wt.%, more preferably from 35 to 98 wt.%, particularly preferably from 40 to 95 wt.%, most preferably from 40 to 90 wt.%, and most particularly preferably from 45 to 85 wt.%. When the polyorganosilsesquioxane (A) is contained in the adhesive composition in the above-described range, the heat resistance of the resulting cured product tends to be improved.

Radically Polymerizable Compound (B)

In addition to the polyorganosilsesquioxane (A) described above, the adhesive composition according to an embodiment of the present invention may contain one or more radically polymerizable compounds (B) (i.e., a compound that contains a radically polymerizable group and is not the polyorganosilsesquioxane (A) described above). When the adhesive composition according to an embodiment of the present invention contains the radically polymerizable compound (B), the resulting cured product tends to exhibit improved crack resistance.

Examples of the radically polymerizable group contained in the radically polymerizable compound (B) include a vinyl group, a vinyl ether group, a (meth)acryloyloxy group. Among them, from the perspective of improving the heat resistance of the cured product, a (meth)acryloyloxy group is more preferable.

The radically polymerizable compound (B) may include one of or a combination of two or more of the radically polymerizable groups listed above.

The number of radically polymerizable groups included in one molecule of the radically polymerizable compound (B) is not particularly limited, and preferably 1 to 50, more preferably 1 to 30, and even more preferably 2 to 20.

The radically polymerizable compound (B) may be a monomer, or may be a reactive oligomer or reactive polymer formed by polymerized monomers. Among them, a monomer and/or a reactive oligomer (i.e. an oligomer containing a radically polymerizable group) are preferable because of their low viscosity and ability to be uniformly mixed with other components in the adhesive composition.

The molecular weight of the radically polymerizable compound (B) (weight average molecular weight in the case of oligomers or polymers) is not particularly limited, and preferably from 200 to 5000 and more preferably from 200 to 3000, in the perspective of ability to be uniformly mixed with other components in the adhesive composition, allow achieving the effect of improving the crack resistance of the cured product. The weight average molecular weight of the radically polymerizable compound (B) can be measured by the method described in relation to the polyorganosilsesquioxane (A) described above.

The radically polymerizable group equivalent of the radically polymerizable compound (B) is not particularly limited, and is preferably from 60 to 3000, and more preferably from 70 to 1500, because the crack resistance of the cured product is improved. The radically polymerizable group equivalent of the radically polymerizable compound (B) means the molecular weight (the weight average molecular weight in the case of a polymeric compound) of the compound per functional group.

Examples of the monomers include (meth)acryloyloxy group-containing compounds such as trimethylolpropane tri(meth)acrylate, ditrimethylolpropane tetra(meth)acrylate, pentaerythritol tri(meth)acrylate, pentaerythritol tetra(meth)acrylate, dipentaerythritol penta(meth)acrylate, dipentaerythritol hexa(meth)acrylate, glycerol tri(meth)acrylate, tris(2-hydroxyethyl)isocyanurate tri(meth)acrylate, ethylene glycol di(meth)acrylate, 1,3-butanediol di(meth)acrylate, 1,4-butanediol di(meth)acrylate, 1,6-hexanediol di(meth)acrylate, neopentyl glycol di(meth)acrylate, diethylene glycol di(meth)acrylate, triethylene glycol di(meth)acrylate, dipropylene glycol di(meth)acrylate, bis(2-hydroxyethyl)isocyanurate di(meth)acrylate, dicyclopentanyl diacrylate, and DA-141 (available from Nagase ChemteX Corporation); vinyl ether group-containing compounds such as
ethylene glycol divinyl ether, diethylene glycol divinyl ether, triethylene glycol divinyl ether, trimethylolpropane diallyl ether, pentaerythritol triallyl ether, and polyallyl (meth)acrylate; and vinyl group-containing compounds such as styrene and divinylbenzene.

Examples of the reactive oligomer include epoxy acrylates, urethane acrylates, unsaturated polyesters, polyester acrylates, polyether acrylates, vinyl acrylates, silicone acrylates, and polystyrylethyl methacrylates.

Examples of the reactive oligomers include, for example, products available under the trade names "Aronix M-211B" and "Aronix M-208" (available from Toagosei Co., Ltd.), and trade names "NK ester", "ABE-300", "A-BPE-4", "A-BPE-10", "A-BPE-20", "A-BPE-30", "BPE-100", "BPE-200", "BPE-500", "BPE-900", and "BPE-1300N" (available from Shin-Nakamura Chemical Co., Ltd.).

Among them, a monomer or a reactive oligomer that do not have a urethane skeleton (in particular, at least one selected from epoxy acrylates, unsaturated polyesters, polyester acrylates, polyether acrylates, vinyl acrylates, silicone acrylates, and polystyrylethyl methacrylates) are preferably used as the radically polymerizable compound (B), from the perspective of the heat resistance of the resulting cured product. Among them, a radically polymerizable compound containing two or more functional groups is preferably used.

When the adhesive composition according to an embodiment of the present invention contains the radically polymerizable compound (B), the content (blended amount) of the radically polymerizable compound (B) is not particularly limited, and is, for example, 5 to 80 wt.% relative to the total amount of the polymerizable compounds (100 wt.%). The upper limit is preferably 60 wt.% and particularly preferably 55 wt.%, because the heat resistance of the resulting cured product is improved. The lower limit is preferably 10 wt.%, and particularly preferably 15 wt.%, because the effect of improving the crack resistance can be achieved.

Furthermore, the blending ratio of the polyorganosilsesquioxane (A) and the radically polymerizable compound (B) (the former/the latter: weight ratio) is not particularly limited, and is preferably 90/10 to 10/90, more preferably 85/15 to 35/65, and particularly preferably 85/15 to 50/50 because both heat resistance and crack resistance can be imparted to the resulting cured product. When the proportion of the blended polyorganosilsesquioxane (A) is less than the lower limit of the range described above, the heat resistance tends to decrease. On the other hand, when the proportion of the blended radically polymerizable compound (B) is less than the lower limit of the range described above, crack resistance tends to decrease.

Radical Polymerization Initiator (C)

The adhesive composition according to an embodiment of the present invention preferably further includes a radical polymerization initiator (C). The radical polymerization initiator (C) includes a thermal radical polymerization initiator that generates radicals upon heating and initiates a curing reaction of the polymerizable compound, and a photoradical polymerization initiator that generates radicals upon irradiation with ultraviolet light and initiates a curing reaction of the polymerizable compound. Among them, thermal radical polymerization initiators are preferable because of their excellent handleability.

Examples of the thermal radical polymerization initiator include azo compounds and peroxides. One of these compounds can be used alone or a combination of two or more of these compounds can be used.

Examples of the azo compound include 2,2'-azobisisobutyronitrile, 2,2'-azobis(2,4-dimethylvaleronitrile), 2,2'-azobis(4-methoxy-2,4-dimethylvaleronitrile), dimethyl-2,2'-azobis(2-methylpropionate), dimethyl 2,2'-azobis(isobutyrate), diethyl-2,2'-azobis(2-methylpropionate), and dibutyl-2,2'-azobis(2-methylpropionate).

Examples of the peroxide include hydroperoxides, dialkyl peroxides, peroxyesters, diacyl peroxides, peroxydicarbonates, peroxyketals, ketone peroxides (for example, benzoyl peroxide, t-butyl peroxy-2-ethylhexanoate, 2,5-dimethyl-2,5-di(2-ethylhexanoyl)peroxyhexane, t-butyl peroxybenzoate, t-butyl peroxide, cumene hydroperoxide, dicumyl peroxide, di-t-butyl peroxide,
2,5-dimethyl-2,5-dibutylperoxyhexane, 2,4-dichlorobenzoyl peroxide, 1,4-di(2-t-butylperoxyisopropyl)benzene, 1,1-bis(t-butylperoxy)-3,3,5-trimethylcyclohexane, methyl ethyl ketone peroxide, 1,1,3,3-tetramethylbutylperoxy-2-ethylhexanoate). Among them, from the perspective of storage stability, ketone peroxides are preferable, and, in particular, dicumyl peroxide is preferable from the perspective of heat resistance.

When the adhesive composition according to an embodiment of the present invention contains the radical polymerization initiator, the content (blended amount) of the radical polymerization initiator is not particularly limited, and is preferably from 0.1 to 3.0 parts by weight, relative to 100 parts by weight of the polymerizable compounds (the total

amount of the polyorganosilsesquioxane (A), or the total amount of the polyorganosilsesquioxane (A), the radically polymerizable compound (B), and the silane coupling agent (D), when the radically polymerizable compound (B) and/or the silane coupling agent (D) is contained). When the adhesive composition contains 0.1 part by weight or greater of the radical polymerization initiator, it is possible to allow the curing reaction to efficiently and sufficiently proceed, and thus the adhesiveness tends to be further improved. On the other hand, when the adhesive composition contains 3.0 parts by weight or less of the radical polymerization initiator, the heat resistance of the resulting cured product tends to be improved.

Silane Coupling Agent (D)

The adhesive composition according to an embodiment of the present invention may further contain one or more silane coupling agents (D). When the silane coupling agent (D) is contained, excellent crack resistance, adhesion, and heat resistance properties can be imparted to the resulting cured product.

The silane coupling agent (D) is preferably a compound represented by the following Formula (d).

[Chem. 3]

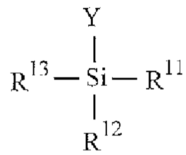

(d)

In Formula (d), $R^{11}$ to $R^{13}$ are the same or different and each represent an OR or R group, and at least one of $R^{11}$ to $R^{13}$ is an OR group (where, R is a monovalent hydrocarbon group optionally having a substituent); and Y represents a group containing a radically polymerizable group.

Examples of the monovalent hydrocarbon group R include an alkyl group having 1 to 15 carbons such as a methyl group, an ethyl group, a propyl group, a butyl group, a pentyl group, or a hexyl group; an alkenyl group having 2 to 15 carbons such as a vinyl group, an allyl group, a butenyl group, or a pentenyl group, or a hexenyl group; a cycloalkyl group having 3 to 15 carbons such as a cyclopropyl group, a cyclobutyl group, a cyclopentyl group, a cyclohexyl group, or a cyclododecyl group; an aryl group having 6 to 15 carbons such as a phenyl group, a tolyl group, a xylyl group, or a naphthyl group; and a group formed by two or more of these groups bonded through a single bond (e.g., a cycloalkyl-alkyl group such as a cyclohexylmethyl group or a methylcyclohexyl group; an aralkyl group such as a benzyl group or a phenethyl group) and a group formed by two or more of these groups bonded through a linking group such as an ether bond (-O-), a thioether bond (-S-), an ester bond (-CO-O-), an amide bond (-CO-NH-), or a carbonyl group (-CO-).

The monovalent hydrocarbon group optionally has a substituent such as a halogen atom, a hydroxy group, or a carboxy group.

In Formula (d), Y represents a group containing a radically polymerizable group, examples of which include a vinyl group, a vinyl ether group, and a (meth)acryloyloxy group. Preferably, Y is a group containing a (meth)acryloyloxy group as a radically polymerizable group, because the heat resistance of the cured product is improved.

Therefore, the silane coupling agent (D) is preferably a compound represented by Formula (d-1) below.

[Chem. 4]

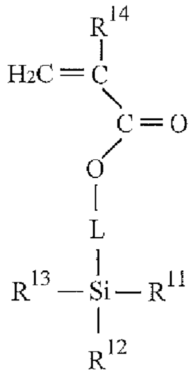

(d-1)

In Formula (d-1), $R^{11}$ to $R^{13}$ are the same or different and each represent an OR or R group, and at least one of $R^{11}$ to $R^{13}$ is an OR group (where, R is a monovalent hydrocarbon group optionally having a substituent); L represents a divalent hydrocarbon group having 1 to 20 carbons; and $R^{14}$ represents a hydrogen atom or a methyl group.

$R^{11}$ to $R^{13}$ in Formula (d-1) are as defined above. L represents a divalent hydrocarbon group having 1 to 20 carbons, examples of which include a linear or branched alkylene group having 1 to 20 carbons such as a methylene group, a methylmethylene group, a dimethylmethylene group, an ethylene group, a propylene group, a trimethylene group, a tetramethylene group, a pentamethylene group, a hexamethylene group, and a decamethylene group; and a cycloalkylene group having 3 to 20 carbons (including a cycloalkylidene group), such as a 1,2-cyclopentylene group, a 1,3-cyclopentylene group, a cyclopentylidene group, a 1,2-cyclohexylene group, a 1,3-cyclohexylene group, a 1,4-cyclohexylene group, and a cyclohexylidene group. Among them, since the crack resistance of the cured product is improved, L is preferably a linear or branched alkylene group having 1 to 20 carbons, and a linear or branched alkylene group having 3 to 20 (in particular, 3 to 10, and in more particular, 3 to 5) carbons is particularly preferable.

At least one selected from 3-(meth)acryloyloxypropyltrimethoxysilane, 3-(meth)acryloyloxypropyltriethoxysilane, 3-(meth)acryloyloxypropyldimethoxymethylsilane, and 3-(meth)acryloyloxypropyldiethoxymethylsilane is particularly preferable as the silane coupling agent (D).

Commercially available products such as a product under the trade name "KBM-5103" (3-acryloyloxypropyltrimethoxysilane, available from Shin-Etsu Chemical Co., Ltd.) can be used as the silane coupling agent (D).

When the silane coupling agent (D) is contained, the used amount of the silane coupling agent (D) is, for example, about 0.01 to 50 parts by weight, relative to 100 parts by weight of the polymerizable compound included in the adhesive composition according to an embodiment of the present invention (the total amount of the polyorganosilsesquioxane (A), or when the radically polymerizable compound (B) is included, the total amount of the polyorganosilsesquioxane (A) and the radically polymerizable compound (B)). The upper limit of the used amount of the silane coupling agent (D) is preferably 30 parts by weight, particularly preferably 20 parts by weight, most preferably 10 parts by weight, and most particularly preferably 5 parts by weight. The lower limit of the used amount of the silane coupling agent (D) is preferably 0.2 parts by weight, and particularly preferably 1 part by weight.

Antioxidant (E)

When the adhesive composition according to an embodiment of the present invention contains a thermal radical polymerization initiator, the adhesive composition preferably further contains one or more types of antioxidants (E). The antioxidant (E) exhibits effect of retarding progression of radical polymerization reaction by trapping radicals generated from the thermal radical polymerization initiator when heating treatment is performed. In the adhesive composition according to an embodiment of the present invention containing the antioxidant (E), the progression of the radical polymerization reaction can be retarded immediately after the beginning of the heating, and thus when the adhesive composition contains a solvent, the solvent can be evaporated and removed while the radical polymerization reaction is retarded, and when the adhesive composition contains the silane coupling agent (D), the silane coupling agent (D) can exhibit the adhesive effect while the radical polymerization reaction is retarded, and as a result, it is possible to produce a cured product with more excellent insulating property, heat resistance, adhesiveness, and adhesion.

Examples of the antioxidant include phenolic antioxidants, phosphorus-based antioxidants, thioester-based antioxidants, and amine-based antioxidants. In the present invention, a phenolic antioxidant is preferably used because further improved heat resistance can be achieved in the resulting cured product.

Examples of phenolic antioxidants include pentaerythritol tetrakis[3(3,5-di-t-butyl-4-hydroxyphenyl)propionate], thiodiethylene bis[3-(3,5-di-t-butyl-4-hydroxyphenyl)propionate], octadecyl 3-(3,5-di-t-butyl-4-hydroxyphenyl)propionate, N,N'-hexamethylene bis[3-(3,5-di-t-butyl-4-hydroxyphenyl)propionamide], octyl 3-(4-hydroxy-3,5-diisopropylphenyl)propionate, 1,3,5-tris(4-hydroxy-3,5-di-t-butylbenzyl)-2,4,6-trimethylbenzene, 2,4-bis(dodecylthiomethyl)-6-methylphenol, and calcium bis[3,5-di(t-butyl)-4-hydroxybenzyl(ethoxy)phosphinate]. In the present invention, for example, a commercially available product such as a product under the trade name "Irganox 1010", "Irganox 1035", "Irganox 1076", "Irganox 1098", "Irganox 1135", "Irganox 1330", "Irganox 1726", or "Irganox 1425WL" (available from BASF) can be used.

When the antioxidant (E) is contained, the used amount of the antioxidant (E) is, for example, from 0.1 to 10.0 parts by weight, preferably from 0.5 to 5.0 parts by weight, and particularly preferably from 0.5 to 3.0 parts by weight, relative to 1 part by weight of the thermal radical polymerization initiator included in the adhesive composition according to an embodiment of the present invention.

Furthermore, when the antioxidant (E) is contained, the used amount of the antioxidant (E) is, for example, from 0.05 to 10.0 parts by weight, and preferably from 0.1 to 3.0 parts by weight, relative to 100 parts by weight of the polymerizable compound included in the adhesive composition according to an embodiment of the present invention (the total amount of the polyorganosilsesquioxane (A), or when the radically polymerizable compound (B) is included, the total amount of the polyorganosilsesquioxane (A) and the radically polymerizable compound (B)).

Chain Transfer Agent (F)

When the adhesive composition according to an embodiment of the present invention contains a thermal radical polymerization initiator, the adhesive composition preferably further contains one or more types of chain transfer agents (F). The chain transfer agent (F) exhibits an effect of stopping polymerization reaction of a polymerizable compound and transferring a radical to another polymerizable compound. In the adhesive composition according to an embodiment of the present invention containing the chain transfer agent (F), the progression of the radical polymerization reaction can be retarded immediately after the beginning of the heating, and thus when the adhesive composition contains a solvent, the solvent can be evaporated and removed while the radical polymerization reaction is retarded, and when the adhesive composition contains the silane coupling agent (D), the silane coupling agent (D) can exhibit the adhesive effect while the radical polymerization reaction is retarded, and as a result, it is possible to produce a cured product with more excellent insulating property, heat resistance, adhesiveness, and adhesion.
Examples of the chain transfer agent (F) include thiols (n-dodecyl mercaptan, n-octyl mercaptan, n-butyl mercaptan, t-butyl mercaptan, n-lauryl mercaptan, mercaptoethanol, mercaptopropanol, and triethylene glycol dimercaptan, etc.), thiol acids (such as mercaptopropionic acid, thiobenzoic acid, thioglycolic acid, and thiomalic acid), alcohols (such as isopropyl alcohol), amines (such as dibutylamine), hypophosphites (such as sodium hypophosphite), α-methylstyrene dimer, terpinolene, myrcene, limonene, α-pinene, and β-pinene.
When the chain transfer agent (F) is contained, the used amount of the chain transfer agent (F) is, for example, from 0.05 to 1.0 parts by weight, and preferably from 0.1 to 0.5 parts by weight, relative to 1 part by weight of the thermal radical polymerization initiator included in the adhesive composition according to an embodiment of the present invention.
Furthermore, when the chain transfer agent (F) is contained, the used amount of the chain transfer agent (F) is, for example, from 0.05 to 1.0 parts by weight, and preferably from 0.05 to 0.1 parts by weight, relative to 100 parts by weight of the polymerizable compound included in the adhesive composition according to an embodiment of the present invention (the total amount of the polyorganosilsesquioxane (A), or when the radically polymerizable compound (B) is included, the total amount of the polyorganosilsesquioxane (A) and the radically polymerizable compound (B)).

Others

The adhesive composition according to an embodiment of the present invention may further contain one or more types of additional components as long as the effects of the present invention are not impaired. Examples of the additional components include known additives such as solvents, crosslinking promoters, tackifiers, anti-aging agents, fillers, conductive powders of metals, curing assistants, stabilizers (such as ultraviolet absorbers, photostabilizers, thermal stabilizers, heavy-metal deactivators), flame retardants, flame retardant auxiliaries, reinforcers, nucleating agents, lubricants, waxes, plasticizers, softeners, surfactants, release agents, impact modifiers, hue improvers, clearing agents, rheology adjusters, workability improvers, colorants, antistatic agents, dispersants, surface conditioners, surface modifiers, delustering agents, antifoaming agents, foam inhibitors, defoaming agents, antimicrobial agents, antiseptic agents, viscosity modifiers, thickeners, photosensitizers, and blowing agents.
The solvent is not particularly limited and can be any solvent into which the polyorganosilsesquioxane (A) and additives used as necessary can be dissolved and which does not inhibit polymerization. Examples of the solvent include water and organic solvents.
The solvent is preferably a solvent that can impart fluidity suitable for application by spin coating, and can be easily removed by heating at a temperature at which progression of polymerization can be suppressed. Thus, the solvent preferably has a boiling point of 170°C or lower under normal pressure.
Examples of the solvent include toluene, butyl acetate, methyl isobutyl ketone, xylene, mesitylene, propylene glycol monomethyl ether, propyleneglycol monomethyl ether acetate, and cyclohexanone. One of these compounds can be used alone or a combination of two or more of these compounds can be used.
The solvent is preferably used in a state in which the concentration of nonvolatile components contained in the adhesive composition is, for example, from about 30 to 80 wt.%, preferably from 40 to 70 wt.%, and particularly preferably from 50 to 60 wt.% is created, because excellent coating property upon spin coating can be achieved. An excessive used amount of solvent tends to result in excessive decrease in the viscosity of the adhesive composition, and as a result, formation of a layer with an appropriate thickness (for example, from about 0.5 to 30 μm) tends to be difficult. On the other hand, an insufficient, small used amount of solvent tends to result in excessive high viscosity of the adhesive composition, and as a result, application of the adhesive composition to an adherend tends to be difficult.
The adhesive composition according to present invention can be prepared by, for example, agitating and mixing the components described above at room temperature or under heating as necessary. The adhesive composition according to an embodiment of present invention can be used as a one-part composition, which contains the components premixed and is used as is, or used as a multi-part composition, for example, of which two or more components having been separately stored are mixed for use in a predetermined ratio before use [for example, a two-part composition (for

example, a first agent including the components (A), (B), (C), (E), and (F), and a second agent including the component (D))]. In addition, when the adhesive composition according to an embodiment of the present invention is the two-part composition including a first agent including the components (A), (B), (C), (E), and (F) and a second agent including the component (D) (for example, an anchor coating agent), the first agent and the second agent may not be mixed together prior to use, and a method of use in which these agents are separately applied onto an adherend and these agents are, at least partially, mixed with each other on the coated surface may be employed.

The adhesive composition according to an embodiment of the present invention is preferably a liquid at normal temperature (about 25°C), but not limited thereto. The viscosity of the adhesive composition according to an embodiment of the present invention is not particularly limited, and is preferably set appropriately depending on the thickness of the coating upon application by spin coating. For example, when the thickness of coating upon application is 0.1 to 50 μm, the viscosity of 1 to 5000 mPa·s is preferable. When the viscosity of the adhesive composition according to an embodiment of the present invention falls within the aforementioned range, a coating film having a uniform thickness can be easily formed on a thin film substrate such as a silicon wafer. The viscosity of the adhesive composition according to an embodiment of the present invention can be measured using a viscometer (trade name "MCR301", available from Anton Paar GmbH) under conditions: a swing angle of 5%, frequency from 0.1 to 100 (1/s), and a temperature of 25°C.

After curing, the adhesive composition according to an embodiment of the present invention can be converted into a cured product having excellent heat resistance, insulating property, heat resistance, crack resistance, and adhesiveness and adhesion to an adherend. Therefore, the adhesive composition according to an embodiment of the present invention can be suitably used to bond desired articles (components, etc.) together.

Cured Product

A cured product according to an embodiment of the present invention is a cured product of the above-described adhesive composition. The cured product according to an embodiment of the present invention is produced as a result of proceeding the polymerization reaction of the polymerizable compounds (including polyorganosilsesquioxane (A)) included in the adhesive composition.

The method of proceeding the polymerization reaction of the polymerizable compounds, that is, the method of curing, can be appropriately selected from known methods. For example, when the adhesive composition according to an embodiment of the present invention contains a thermal radical polymerization initiator, the adhesive composition can be cured by a heat treatment. Furthermore, for example, when the adhesive composition according to an embodiment of the present invention contains a photoradical polymerization initiator, the adhesive composition can be cured by irradiation with the active energy ray.

When the curing is performed by heating, the adhesive composition according to an embodiment of the present invention, which includes the polyorganosilsesquioxane (A), can thus quickly form a cured product by heating at a low temperature of less than 200°C. In other words, the adhesive composition according to an embodiment of the present invention has a low temperature curability. The heating temperature is, for example, from 50 to 190°C.

In particular, the method of curing the adhesive composition according to an embodiment of the present invention preferably includes a heating treatment in which a curing temperature is changed stepwise, because a cured product having more excellent crack resistance can be produced. For example, it is preferable that the degree of cure at the end of a first stage of the heating treatment is 85% or less (for example, from 50 to 85%, particularly preferably from 55 to 85%, and more preferably from 60 to 80%), and a degree of cure of greater than 85% (preferably 90% or greater, particularly preferably 95% or greater, and note that the upper limit of the degree of cure is 100%.) is achieved after a second or later stage of the heating treatment.

The degree of cure at the end of the first stage of the heat treatment can be calculated from the following equation by using calorific values of a sample at the end of the first stage of the heat treatment and the sample before the heat treatment, as measured by DSC technique.

$$\text{Degree of cure (\%)} = [1 - (\text{calorific value at end of first stage of heat treatment}/\text{calorific value before heat treatment})] \times 100$$

It is thought that, when the degree of cure at the end of the first stage of the heat treatment is controlled to be 85% or less, it is possible to form a structure in which stress relaxation tends to occur, and thus more excellent crack resistance of the final cured product can be achieved.

Since a cured product having more excellent crack resistance can be produced, the heating temperature of the first stage of the heating treatment is preferably set to a temperature that does not result in the degree of cure of greater than 85% at the end of the first stage of the heating treatment even when a heat treatment at that temperature is performed for 5 minutes or longer. The heating temperature of the first stage of the heating treatment is, for example,

not lower than 90°C and lower than 150°C, preferably from 100 to 140°C, and particularly preferably from 110 to 140°C. Furthermore, since a cured product having more excellent crack resistance can be produced, slow curing over a certain period of time is preferable, and the heating time is preferably, for example, 5 minutes or longer (preferably 5 to 120 minutes, particularly preferably 10 to 60 minutes, most preferably 30 to 60 minutes).

The heating temperature of the second and later stages of the heat treatment is, for example, from 150 to 200°C, preferably from 160 to 190°C, and particularly preferably from 160 to 180°C. The heating time is, for example, from 5 to 120 minutes, and preferably from 10 to 60 minutes.

The cured product according to an embodiment of the present invention thus obtained has excellent heat resistance, and has a thermal decomposition temperature of, for example, 200°C or higher (for example, from 200°C to 500°C, preferably 260°C or higher, and particularly preferably 300°C or higher). Note that the thermal decomposition temperature is determined by the method described in Examples.

Furthermore, the cured product according to an embodiment of the present invention has excellent insulating property, and adhesiveness and adhesion to an adherend. Furthermore, the cured product according to an embodiment of the present invention has excellent crack resistance, and thus, in the cured product, cracking is suppressed even when a thermal shock is applied.

Substrate with Adhesive Layer

In a substrate with an adhesive layer according to an embodiment of the present invention, the adhesive layer is formed on the substrate and formed from a solidified product of the above-described adhesive composition. The substrate with an adhesive layer according to an embodiment of the present invention may be a single-sided type of the substrate with an adhesive layer, which is a substrate including an adhesive layer on one of the surfaces of the substrate, or a double-sided type of the substrate with an adhesive layer, which is a substrate including an adhesive layer on both surfaces of the substrate. When the substrate with an adhesive layer according to an embodiment of the present invention is a double-sided type, the adhesive layer on at least one of the both surfaces may be a layer formed from the solidified product of the adhesive composition according to an embodiment of the present invention, and the adhesive layer on the other surface may be a layer formed from another adhesive.

Examples of the substrate include organic substrates (e.g., plastic substrates, paper substrates, and wood substrates) and inorganic substrates (e.g., metal substrates, ceramic substrates, semiconductor substrates, and glass substrates).

The substrate with an adhesive layer according to an embodiment of the present invention may include only a single layer of substrate or may include two or more layers of substrates. The thickness of the substrate is not particularly limited, and can be appropriately set, for example, in the range from 1 to 10000 μm.

Furthermore, the substrate with an adhesive layer according to an embodiment of the present invention may include only a single layer of adhesive or may include two or more types of adhesive layers. The thickness of the adhesive layer is not particularly limited, and can be appropriately set, for example, in the range from 0.1 to 10000 μm.

When, in the substrate with an adhesive layer according to an embodiment of the present invention, the adhesive layer includes at least two layers which are a layer formed from the solidified product of the first agent and a layer formed from the solidified product of the second agent, the thickness of the layer formed from the solidified product of the first agent is not particularly limited, and can be appropriately set, for example, in the range from 0.1 to 10000 μm. In addition, the thickness of the layer formed from the solidified product of the second agent (so-called anchor coating agent layer) is not particularly limited, and can be appropriately set, for example, in the range from 0.001 to 10000 μm.

The substrate with an adhesive layer according to an embodiment of the present invention may include, in addition to the substrate and the adhesive layer, an additional layer (for example, an intermediate layer or a base coat layer).

The adhesive layer included in the substrate with an adhesive layer is formed from a solidified product of the adhesive composition described above, and when the adhesive composition is a composition including the aforementioned components (A), (B), (C), (D), (E), and (F), the adhesive layer is a solidified product of these components. On the other hand, when the adhesive composition is a two-part composition including a first agent including the components (A), (B), (C), (E), and (F), and a second agent (so-called anchor coating agent) including the component (D) where the first agent and the second agent are separately used instead of being mixed together prior to use, the adhesive layer includes at least two layers, i.e., a layer formed from the solidified product of the first agent and a layer formed from the solidified product of the second agent. The order of stacking of the two layers is preferably changed as appropriate depending on the type of substrate on which the adhesive layer is provided. A surface directly contacting with an inorganic substrate is preferably provided with a layer formed from the solidified product of the second agent (so-called anchor coating agent layer).

For example, when the substrate is an inorganic substrate, the order of stacking in a substrate with an adhesive layer is preferably [the inorganic substrate/the layer formed from the solidified product of the second agent/the layer

formed from the solidified product of the first agent], because excellent adhesiveness and adhesion can be achieved.

On the other hand, when the substrate is an organic substrate, the adhesive composition does not need to include the component (D), and an adhesive composition that does not include the component (D) is preferably used.

The substrate with an adhesive layer according to an embodiment of the present invention can be produced by, for example, applying the adhesive composition according to an embodiment of the present invention to at least one surface of a substrate and drying the adhesive composition as necessary. The method of application is not particularly limited, and any known means can be used. Furthermore, the drying means and conditions are not particularly limited, and it is possible to set any condition in which volatile components such as a solvent can be quickly removed while the progression of the curing reaction is suppressed. The adhesive layer thus obtained is not adhesive at less than 50°C. However, when heated to a temperature at which damage to electronic components such as semiconductor chips can be suppressed, that adhesive layer exhibits adhesiveness, and then is quickly cured.

Examples of the shape of the substrate with an adhesive layer according to an embodiment of the present invention include a sheet-like shape, a film-like shape, a tape-like shape, and a plate-like shape. A release liner may be attached to a surface of the adhesive layer.

Laminate

A laminate according to an embodiment of the present invention has a structure in which two or more substrates are stacked with a cured product of the adhesive composition.

Examples of the substrate include substrates described in relation to the substrate with an adhesive layer.

The laminate according to an embodiment of the present invention is preferably a laminate having a structure in which a wafer is stacked on a wafer, a chip is stacked on a chip, or a chip is stacked on a wafer with the cured product of the adhesive composition interposed therebetween.

The laminate according to an embodiment of the present invention can be produced, for example, by applying the adhesive composition to at least one of the substrates to form an adhesive layer, affixing the other substrate thereto, and curing the adhesive composition.

For example, when the adhesive composition is a composition including the components (A), (B), (C), (D), (E), and (F), the laminate can be produced by applying the adhesive composition to a bonding surface of a substrate to form an adhesive layer, affixing another substrate thereto, and curing the adhesive composition.

For example, when the adhesive composition is a two-part composition including a first agent including the components (A), (B), (C), (E), and (F), and a second agent (so-called anchor coating agent) including the component (D) where the first agent and the second agent are separately applied instead of being mixed together prior to use, the order of application is preferably changed as appropriate depending on the type of substrate. In the case of an inorganic substrate, it is preferable that the second agent is applied at first.

For example, a laminate including two or more inorganic substrates can be produced by, first, applying the second agent to bonding surfaces of all of the inorganic substrates to be stacked, applying the first agent to the surfaces of the inorganic substrates to which the second agent has been applied and bonding the inorganic substrates, and then curing the first agent.

For example, a laminate in which an inorganic substrate is stacked on an organic substrate can be produced by applying the first agent to a bonding surface of the organic substrate, applying the second agent to a bonding surface of the inorganic substrate, bonding the organic substrate to which the first agent has been applied and the inorganic substrate to which the second agent has been applied in a manner that both the surfaces with the agents applied thereon comes into contact with each other, and then curing the first agent.

Alternatively, the laminate may be produced by stacking the aforementioned substrates with an adhesive layer and curing the adhesive composition.

The total thickness of the laminate according to an embodiment of the present invention can be appropriately set in the range from 1 to 100000 $\mu$m, for example. Furthermore, the thickness of the adhesive layer (total thickness of adhesive layers in the case where two or more layers are included) is not particularly limited, and can be appropriately set in the range from 1 to 100000 $\mu$m, for example.

The laminate according to an embodiment of the present invention may include an additional layer (for example, an intermediate layer, a base coat layer, and another adhesive layer), in addition to the layer formed from the cured product of the adhesive composition and the layer formed from the substrate.

Specific examples of the laminate according to an embodiment of the present invention include a laminate having a structure in which a semiconductor wafer is stacked on a semiconductor wafer, a semiconductor chip is stacked on a semiconductor chip, or a semiconductor chip is stacked on a semiconductor wafer with the cured product of the adhesive composition interposed therebetween.

When the laminate is a three-dimensional laminate of semiconductor chips, cracking or peeling occurring in the layer formed from the cured product of the adhesive composition in the laminate causes breakage of the wiring,

which results in breakdown of the device in which the laminate is used. However, the laminate according to an embodiment of the present invention has a structure in which a plurality of substrates are firmly bonded by using the cured product having excellent adhesiveness to an adherend, adhesion, crack resistance, and heat resistance. Therefore, the laminate is highly reliable.

Therefore, a device including the laminate according to an embodiment of the present invention (for example, microprocessors, semiconductor memories, ICs for power supply, ICs for communication, semiconductor sensors, and MEMS, as well as, semiconductor devices including any of these components, such as servers, workstations, on-board computers, personal computers, communication devices, imaging devices, and image display devices) is also highly reliable.

Examples

Hereinafter, the present invention will be described in more detail based on examples, but the present invention is not limited by these examples.

Molecular weight of a product was measured by using Alliance HPLC system 2695 (available from Waters), Refractive Index Detector 2414 (available from Waters), Tskgel $GMH_{HR}$-M column (available from Tosoh Corporation) x 2, Tskgel guard column $H_{HR}L$ (available from Tosoh Corporation) as a guard column, and COLUMN HEATER U-620 (available from Sugai) as a column oven. THF was used as a solvent, and a measurement condition was 40°C.

[T3 form/T2 form] in the product was measured by $^{29}$Si-NMR spectrum measurement with JEOL ECA500 (500 MHz).

Production Example 1: Production of Acryloyl Group-containing Polyorganosilsesquioxane (1)

To a 1000-mL flask (reaction vessel) equipped with a thermometer, a stirrer, a reflux condenser, and a nitrogen inlet tube, 370 mmol (80 g) of 3-(acryloyloxy)propyltrimethoxysilane and 320 g of acetone were charged under a nitrogen stream, and the temperature was raised to 50°C. To the resulting mixture, 10.144 g of 5% potassium carbonate aqueous solution (3.67 mmol as potassium carbonate) was added over 5 minutes, and then 3670.0 mmol (66.08 g) of water was added over 20 minutes. Here, no significant temperature increase occurred during the addition. Then, polycondensation reaction was performed for 2 hours at 50°C under a nitrogen stream.

The reaction solution was then cooled and 160 g of methyl isobutyl ketone and 99.056 g of 5% saline were added into the reaction solution. The solution was transferred to a 1 L separatory funnel, and then 160 g of methyl isobutyl ketone was again added, and water washing was performed. After separation, the aqueous layer was discarded, and the the lower layer liquid was washed with water until it became neutral. The upper layer liquid was collected, and then the solvent was distilled off from the upper layer liquid under conditions of 1 mmHg and 50°C. As a result, 71 g of a colorless, transparent liquid product (acryloyl group-containing polyorganosilsesquioxane (= ASQ) (1)) containing 22.5 wt.% of methyl isobutyl ketone was obtained.

From analysis of the resulting product, it was revealed that the product has a number average molecular weight of 2051 and a molecular weight dispersity of 1.29. [T3 form/T2 form] calculated based on the $^{29}$Si-NMR spectrum of the product was 13.4.

The $^{1}$H-NMR chart and $^{29}$Si-NMR chart of the resulting acryloyl group-containing polyorganosilsesquioxane (1) are illustrated in FIGS. 1 and 2, respectively.

Production Example 2: Production of Acryloyl Group-containing Polyorganosilsesquioxane (2)

To a 1000 mL flask (reaction vessel) equipped with a thermometer, a stirrer, a reflux condenser, and a nitrogen inlet tube, 71 g of the mixture including the acryloyl group-containing polyorganosilsesquioxane (1) obtained in Production Example 1 was charged under a nitrogen stream. Relative to the net content of the acryloyl group-containing polyorganosilsesquioxane (1) (55.0 g), 10 ppm (0.55 mg) of potassium hydroxide and 2000 ppm (110 mg) of water were added. From molecular weight determination for samples from the mixture that had been heated at 40°C for 30 hours, it was revealed that the number average molecular weight Mn increased to 5693. Thereafter, the mixture was cooled to room temperature. To remove alkali components and concentrate the mixture, 300 mL of methyl isobutyl ketone was added, 300 mL of water was added, and water washing was repeatedly performed. As a result, 71 g of a colorless, transparent liquid product containing 25 wt.% of methyl isobutyl ketone (acryloyl group-containing polyorganosilsesquioxane (= ASQ) (2)) was obtained.

From analysis of the product, it is revealed that the product has a number average molecular weight of 5693 and a molecular weight dispersity of 2.58. [T3 form/T2 form] calculated based on the $^{29}$Si-NMR spectrum of the product was 47.3.

The $^{1}$H-NMR chart and $^{29}$Si-NMR chart of the resulting acryloyl group-containing polyorganosilsesquioxane

(2) are illustrated in FIGS. 3 and 4, respectively.

Examples 1 to 24: Preparation of Two-part Adhesive Compositions Preparation of First Agent

Components were mixed and dissolved according to the formulations shown in the following table (values are shown in parts by weight) to prepare adhesive compositions (first agents).

Preparation of Anchor Coating Agent

Components were mixed according to the formulations shown in the following table (values are shown in parts by weight) to produce anchor coating agents.

Production of Laminate

The anchor coating agents produced as described above were applied, by spin coating, to a silicon plate (size: 2 cm × 5 cm, made by dicing a silicon wafer with a diameter of 100 mm (available from SUMCO CORPORATION)) and a glass plate (4 inches, available from SCHOTT Japan Corporation) and these plates were heated at 120°C for 5 minutes. As a result, a silicon plate with an anchor coating agent layer and a glass plate with an anchor coating agent layer were obtained.

The adhesive composition produced as described above was applied, by spin coating, onto the surface of the anchor coating agent layer of the silicon plate with an anchor coating agent layer, and the silicon plate was heated at 80°C for 4 minutes, and then heated at 100°C for 2 minutes to remove remaining solvent. As a result, a silicon plate with an adhesive layer [adhesive layer/anchor coating agent layer/silicon plate] was produced. The adhesive layer had a thickness of 5 to 6 μm. By applying a pressure of 200 g/$cm^2$ while being heated at 60°C, under reduced pressure, the glass plate with an anchor coating agent layer was bonded to the adhesive layer with the anchor coating agent layer of the glass plate being in contact with the adhesive layer. To cure the adhesive layer, the bonded plates were heated for 30 minutes at a curing temperature of the first stage shown in Table 1 below (first stage), and then heated at 170°C for 30 minutes (second stage). As a result, a laminate [silicon plate/anchor coating agent layer/cured product of adhesive layer/anchor coating agent layer/glass plate] was produced.

Examples 25 to 46: Preparation of One-part Adhesive Composition

Components were mixed and dissolved according to the formulations shown in the table below (values are shown in parts by weight) to prepare adhesive compositions.

Production of Laminate

The (one-part) adhesive composition produced as described above was applied, by spin coating, to a silicon plate (size: 2 cm × 5 cm, made by dicing a silicon wafer with a diameter of 100 mm (available from SUMCO CORPORATION)), and the silicon plate was heated at 80°C for 4 minutes, and then heated at 100°C for 2 minutes to remove remaining solvent. As a result, a silicon plate with an adhesive layer [adhesive layer/silicon plate] was produced. The adhesive layer had a thickness of 5 to 6 μm.

The surface of the adhesive layer of the silicon plate with an adhesive layer [adhesive layer/silicon plate] was brought into contact with a glass plate (4 inches, available from SCHOTT Japan Corporation) under reduced pressure, and these plates were bonded together by applying a pressure of 200 g/$cm^2$ while being heated at 60°C. To cure the adhesive layer, the bonded plates were heated for 30 minutes at a curing temperature of the first stage shown in Table 2 below (first stage), and then heated at 170°C for 30 minutes (second stage). As a result, a laminate [silicon plate/cured product of adhesive layer/glass plate] was produced.

The degree of cure at the end of the first stage of heating, insulating property, heat resistance, crack resistance, adhesiveness, and adhesion for the adhesive compositions or laminates obtained in the examples were evaluated by using methods described below.

- Degree of Cure at End of First Stage of Heating

For each of the adhesive compositions obtained in the examples, a calorific value ($H_0$) of the adhesive composition and a calorific value ($H_1$) of adhesive composition which had been subjected to the heat treatment for 30 minutes at the curing temperature of the first stage shown in the table were measured by using DSC technique, and the degree of cure at the end of the first stage of the heat treatment was calculated using the following equation.

$$\text{Degree of cure (\%)} = [1 - (H_1/H_0)] \times 100$$

- Heat Resistance

Each of the adhesive compositions obtained in the examples was applied, by spin coating, onto a glass plate, and the glass plate was heated at 80°C for 4 minutes, and then heated at 100°C for 2 minutes to remove remaining solvent. Then, the glass plate was heated at 150°C for 30 minutes (first stage) and further heated at 170°C for 30 minutes (second stage). As a result, a cured product [cured product of adhesive composition/glass] ([cured product of adhesive composition/anchor coating agent layer/glass] in a case where the two-part adhesive compositions obtained in Examples 1 to 24 were used) was obtained.
The resulting cured product was subjected to thermogravimetric analysis using a thermal analyzer (trade name "TG-DTA6300", available from Seiko Instruments Inc.), to measure its thermal decomposition temperature. Note that, the thermal decomposition temperature is a temperature specified as a point of intersection of a tangent in an initial part in which the weight loss is not observed or a part in which gradual decrease in weight is observed (a section A in FIG. 5) and a tangent to an inflection point in a part in which drastic decrease in weight is observed (a section B in FIG. 5), as illustrated in FIG. 5. The heat resistance was evaluated in accordance with the following criteria.

Very good: Thermal decomposition temperature of 350°C or higher
Good: Thermal decomposition temperature of not lower than 260°C and lower than 350°C
Poor: Thermal decomposition temperature of lower than 260°C

- Adhesiveness

A razor blade (trade name "single edged trimming razor", available from Nisshin EM Co., Ltd) was inserted to the adhesive interface of each of the laminates obtained in the examples. From observation of the adhesive interface of the laminate, adhesiveness was evaluated according to the following criteria.

Good: No interfacial peeling occurred
Poor: Interfacial peeling occurred at least in part

- Adhesion

Each of the adhesive compositions obtained in the examples was applied, by spin coating, onto a silicon plate, and the silicon plate was heated at 80°C for 4 minutes, and then heated at 100°C for 2 minutes to remove remaining solvent. Then, to cure the adhesive layer, the silicon plate was heated at 150°C for 30 minutes (first stage) and further heated at 170°C for 30 minutes (second stage). As a result, [cured product of adhesive composition/silicon plate] ([cured product of adhesive composition/anchor coating agent layer/silicon plate] in a case where the two-part adhesive compositions obtained in Examples 1 to 24 were used) was obtained.
Then, six cuts forming a lattice were formed in the cured product of the adhesive layer of the resulting [cured product of adhesive composition/silicon plate] (or [cured product of adhesive composition/anchor coating agent layer/silicon plate]), so that a cross-cut of 25 squares (1 mm × 1 mm) were formed. The resulting silicon plate was used as a sample for evaluating, according to a cross-cut tape test (conforming to JIS K5400-8.5), the adhesion of the cured product of the adhesive layer to the silicon plate. The following criteria was used in the evaluation.

Very good: No peeling of the cured product of the adhesive layer was observed.

Good: Partial peeling of the cured product of the adhesive layer was observed.

Poor: The cured product of the adhesive layer were entirely peeled off.

- Crack Resistance

The laminates obtained in the examples were heated at 250°C for 30 minutes and then cooled to room temperature. To evaluate the number of cracks formed through this treatment, a region (20 mm × 20 mm), which has a vertex coinciding with the center of the glass plate, is divided into 100 squares (2 mm × 2 mm), and the number of 2 mm squares in which cracks are not formed was counted. The following criteria was used in the evaluation.

Very good: The number of 2 mm squares in which no crack was formed was 65 or greater.
Good: The number of 2 mm squares in which no crack was formed was not less than 50 and less than 65.
Marginal: The number of 2 mm squares in which no crack was formed was not less than 1 and less than 50.
Poor: All of the 2 mm squares included cracks.

- Insulating Property

A P-type silicon plate with an adhesive layer and an N-type silicon plate with an adhesive layer were made by using dilutions of the adhesive compositions obtained in Examples 1 to 46 (specifically, the adhesive compositions produced in the same manner as Examples 1 to 46 except that 1000 parts by weight of PGMEA was used). Aluminum electrodes are formed on the adhesive-applied surfaces of the P-type silicon plate and the N-type silicon plate by using aluminum evaporation technique. As a result, a P-type silicon plate with an aluminum electrode and an N-type silicon plate with an aluminum electrode were prepared.

Electrode terminals were brought into contact with the lower part of the P-type or N-type silicon plate with an adhesive layer and the aluminum electrode formed on the adhesive-applied surface, respectively. Then, voltage was applied and current value was measured to evaluate insulating property. Note that when the two-part adhesive compositions obtained in Examples 1 to 24 were used, a P-type silicon plate with an adhesive layer/anchor coating agent layer, and an N-type silicon plate with an adhesive layer/anchor coating agent layer were formed and used to evaluate insulating property. In each of the silicon plates, the thickness of the adhesive layer was about 150 nm.

Evaluation Criteria:

Good (Insulative): Current value is not greater than $1 \times 10^{-8}$ A/cm$^2$ at voltage of -0.5 to 0.5 MV/cm
Poor (Not insulative): Current value is greater than $1 \times 10^{-8}$ A/cm$^2$ at voltage of -0.5 to 0.5 MV/cm

[Table 1]

| | | Examples | | | | | | | | | | | | | | | | | | | | | | | |
|---|---|---|---|---|---|---|---|---|---|---|---|---|---|---|---|---|---|---|---|---|---|---|---|---|---|
| | | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 |
| Adhesive composition (First agent) | ASQ(1) | 50 | 50 | 50 | 50 | 50 | 50 | 50 | 60 | 70 | 80 | - | - | - | - | - | - | - | - | - | - | - | - | - | - |
| | ASQ(2) | - | - | - | - | - | - | - | - | - | - | 50 | 50 | 50 | 50 | 50 | 50 | 50 | 60 | 70 | 80 | 80 | 100 | 100 | 100 |
| | A-DCP | 50 | - | - | - | - | - | - | 40 | 30 | 20 | 50 | - | - | - | - | - | - | - | - | - | - | - | - | - |
| | A-BPE-4 | - | 50 | - | - | - | - | - | - | - | - | - | 50 | - | - | - | - | - | 40 | 30 | 20 | 20 | - | - | - |
| | A-BPE-10 | - | - | 50 | - | - | - | - | - | - | - | - | - | 50 | - | - | - | - | - | - | - | - | - | - | - |
| | DA-212 | - | - | - | 50 | - | - | - | - | - | - | - | - | - | 50 | - | - | - | - | - | - | - | - | - | - |
| | DA-314 | - | - | - | - | 50 | - | - | - | - | - | - | - | - | - | 50 | - | - | - | - | - | - | - | - | - |
| | U-200PA | - | - | - | - | - | 50 | - | - | - | - | - | - | - | - | - | 50 | - | - | - | - | - | - | - | - |
| | UA-122P | - | - | - | - | - | - | 50 | - | - | - | - | - | - | - | - | - | 50 | - | - | - | - | - | - | - |
| | PGMEA | 100 | 100 | 100 | 100 | 100 | 100 | 100 | 100 | 100 | 100 | 100 | 100 | 100 | 100 | 100 | 100 | 100 | 100 | 100 | 100 | 100 | 100 | 100 | 100 |
| | Dicumyl peroxide | 1 | 1 | 1 | 1 | 1 | 1 | 1 | 1 | 1 | 1 | 1 | 1 | 1 | 1 | 1 | 1 | 1 | 1 | 1 | 1 | 1 | 1 | 1 | 1 |
| | n-Butyl mercaptan | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 |
| | Irg1010 | 1 | 1 | 1 | 1 | 1 | 1 | 1 | 1 | 1 | 1 | 1 | 1 | 1 | 1 | 1 | 1 | 1 | 1 | 1 | 1 | 1 | 1 | 1 | 1 |
| Anchor Coating Agent | KBM5103 | 50 | 50 | 50 | 50 | 50 | 50 | 50 | 50 | 50 | 50 | 50 | 50 | 50 | 50 | 50 | 50 | 50 | 50 | 50 | 50 | - | 50 | 50 | - |
| | KBM1003 | - | - | - | - | - | - | - | - | - | - | - | - | - | - | - | - | - | - | - | - | 50 | - | - | - |

| | | | | | | | | | | | | | | | | | | | | | | | | | |
|---|---|---|---|---|---|---|---|---|---|---|---|---|---|---|---|---|---|---|---|---|---|---|---|---|---|
| (Second agent) | PGMEA | 50 | 50 | 50 | 50 | 50 | 50 | 50 | 50 | 50 | 50 | 50 | 50 | 50 | 50 | 50 | 50 | 50 | 50 | 50 | 50 | 50 | 50 | 50 | - |
| Curing temperature of first stage (°C) | | 150 | 150 | 150 | 150 | 150 | 150 | 150 | 150 | 150 | 150 | 150 | 150 | 150 | 150 | 150 | 150 | 150 | 150 | 150 | 150 | 150 | 150 | 170 | 170 |
| Degree of cure | | 70 | 70 | 70 | 70 | 70 | 70 | 70 | 70 | 70 | 70 | 70 | 70 | 70 | 70 | 70 | 70 | 70 | 70 | 70 | 70 | 70 | 70 | 95 | 95 |
| Evaluation results | Heat resistance | Very good | Very good | Very good | Very good | Very good | Good | Good | Very good | Very good | Very good | Very good | Very good | Very good | Very good | Very good | Good | Good | Very good | Very good | Very good | Very good | Very good | Very good | Very good |
| | Adhesiveness | Good | Good | Good | Good | Good | Good | Good | Good | Good | Good | Good | Good | Good | Good | Good | Good | Good | Good | Good | Good | Good | Good | Good | Good |
| | Adhesion | Very good | Very good | Very good | Very good | Very good | Very good | Very good | Very good | Very good | Very good | Very good | Very good | Very good | Very good | Very good | Very good | Very good | Very good | Very good | Very good | Very good | Very good | Very good | Good |
| | Crack resistance | Very good | Very good | Very good | Very good | Very good | Very good | Very good | Very good | Very good | Very good | Very good | Very good | Very good | Very good | Very good | Very good | Very good | Very good | Very good | Very good | Good | Good | Marginal | Marginal |
| | Insulating property | Good | Good | Good | Good | Good | Good | Good | Good | Good | Good | Good | Good | Good | Good | Good | Good | Good | Good | Good | Good | Good | Good | Good | Good |

[Table 2]

| | | Examples | | | | | | | | | | | | | | | | | | | | | |
|---|---|---|---|---|---|---|---|---|---|---|---|---|---|---|---|---|---|---|---|---|---|---|---|
| | | 25 | 26 | 27 | 28 | 29 | 30 | 31 | 32 | 33 | 34 | 35 | 36 | 37 | 38 | 39 | 40 | 41 | 42 | 43 | 44 | 45 | 46 |
| Adhesive composition (One-part type) | ASQ(1) | 50 | 50 | 50 | 50 | 50 | 50 | 50 | 60 | 70 | 80 | 100 | - | - | - | - | - | - | - | - | - | - | - |
| | ASQ(2) | - | - | - | - | - | - | - | - | - | - | - | 50 | 50 | 50 | 50 | 50 | 50 | 50 | 60 | 70 | 80 | 100 |
| | A-DCP | 50 | - | - | - | - | - | - | 40 | 30 | 20 | - | 50 | - | - | - | - | - | - | - | - | - | - |
| | A-BPE-4 | - | 50 | - | - | - | - | - | - | - | - | - | - | 50 | - | - | - | - | - | 40 | 30 | 20 | - |
| | A-BPE-10 | - | - | 50 | - | - | - | - | - | - | - | - | - | - | 50 | - | - | - | - | - | - | - | - |
| | DA-212 | - | - | - | 50 | - | - | - | - | - | - | - | - | - | - | 50 | - | - | - | - | - | - | - |
| | DA-314 | - | - | - | - | 50 | - | - | - | - | - | - | - | - | - | - | 50 | - | - | - | - | - | - |
| | U-200PA | - | - | - | - | - | 50 | - | - | - | - | - | - | - | - | - | - | 50 | - | - | - | - | - |
| | UA-122P | - | - | - | - | - | - | 50 | - | - | - | - | - | - | - | - | - | - | 50 | - | - | - | - |
| | PGMEA | 100 | 100 | 100 | 100 | 100 | 100 | 100 | 100 | 100 | 100 | 100 | 100 | 100 | 100 | 100 | 100 | 100 | 100 | 100 | 100 | 100 | 100 |
| | Dicumyl peroxide | 1 | 1 | 1 | 1 | 1 | 1 | 1 | 1 | 1 | 1 | 1 | 1 | 1 | 1 | 1 | 1 | 1 | 1 | 1 | 1 | 1 | 1 |
| | n-Butyl mercaptan | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 |
| | Irg1010 | 1 | 1 | 1 | 1 | 1 | 1 | 1 | 1 | 1 | 1 | 1 | 1 | 1 | 1 | 1 | 1 | 1 | 1 | 1 | 1 | 1 | 1 |
| | KBM5103 | 2 | 2 | 2 | 2 | 2 | 2 | 2 | 2 | 2 | 2 | 2 | 2 | 2 | 2 | 2 | 2 | 2 | 2 | 2 | 2 | 2 | 2 |

| | | | | | | | | | | | | | | | | | | | | | | |
|---|---|---|---|---|---|---|---|---|---|---|---|---|---|---|---|---|---|---|---|---|---|---|
| Curing temperature of first stage (°C) | | 150 | 150 | 150 | 150 | 150 | 150 | 150 | 150 | 150 | 150 | 150 | 150 | 150 | 150 | 150 | 150 | 150 | 150 | 150 | 150 | 150 | 150 |
| Degree of cure | | 70 | 70 | 70 | 70 | 70 | 70 | 70 | 70 | 70 | 70 | 70 | 70 | 70 | 70 | 70 | 70 | 70 | 70 | 70 | 70 | 70 | 70 |
| Evaluation results | Heat resistance | Very good | Very good | Very good | Very good | Very good | Good | Good | Very good | Very good | Very good | Very good | Very good | Very good | Very good | Very good | Very good | Good | Good | Very good | Very good | Very good | Very good |
| | Adhesiveness | Good | Good | Good | Good | Good | Good | Good | Good | Good | Good | Good | Good | Good | Good | Good | Good | Good | Good | Good | Good | Good | Good |
| | Adhesion | Very good | Very good | Very good | Very good | Very good | Very good | Very good | Very good | Very good | Very good | Very good | Very good | Very good | Very good | Very good | Very good | Very good | Very good | Very good | Very good | Very good | Very good |
| | Crack resistance | Very good | Very good | Very good | Very good | Very good | Very good | Very good | Very good | Very good | Very good | Good | Very good | Very good | Very good | Very good | Very good | Very good | Very good | Very good | Very good | Very good | Good |
| | Insulating property | Good | Good | Good | Good | Good | Good | Good | Good | Good | Good | Good | Good | Good | Good | Good | Good | Good | Good | Good | Good | Good | Good |

Note that symbols in the tables represent the following compounds. Furthermore, "-" indicates a component not included in a blend.

Polyorganosilsesquioxane (A)

ASQ(1): Acryloyl group-containing polyorganosilsesquioxane obtained in Production Example 1
ASQ(2): Acryloyl group-containing polyorganosilsesquioxane obtained in Production Example 2

Radically Polymerizable Compound (B)

A-DCP: Tricylodecane dimethanol diacrylate, molecular weight: 304, acryloyl group equivalent: 152, available from Shin-Nakamura Chemical Co., Ltd.
A-BPE-4: Ethoxylated bisphenol A diacrylate, molecular weight: 512, acryloyl group equivalent: 256, available from Shin-Nakamura Chemical Co., Ltd.
A-BPE-10: Ethoxylated bisphenol A diacrylate, molecular weight: 776, acryloyl group equivalent: 388, available from Shin-Nakamura Chemical Co., Ltd.
DA-212: 1,6-hexanediol diacrylate, molecular weight: 226, acryloyl group equivalent: 113, available from Nagase ChemteX Corporation
DA-314: Glycerol triacrylate, molecular weight: 254, acryloyl group equivalent weight: 85, available from Nagase ChemteX Corporation
U-200PA: Urethane acrylate, weight average molecular weight: 2700, acryloyl group equivalent: 1350, available from Shin-Nakamura Chemical Co., Ltd.
UA-122P: Urethane acrylate, weight average molecular weight: 1100, acryloyl group equivalent: 550, available from Shin-Nakamura Chemical Co., Ltd.

Thermal Radical Polymerization Initiator (C)

Dicumyl peroxide

Antioxidant (E)

Irg 1010: Hindered phenol antioxidant, trade name "Irganox 1010", available from BASF
Chain Transfer Agent (F)
n-Butyl mercaptan
Silane Coupling Agent (D)

KBM5103: 3-acryloyloxypropyltrimethoxysilane, trade name "KBM-5103", available from Shin-Etsu Chemical Co., Ltd.
KBM1003: Vinyltriethoxysilane, trade name "KBM-1003", available from Shin-Etsu Chemical Co., Ltd.

Others

PGMEA: Solvent, propylene glycol monomethyl ether acetate, boiling point under normal pressure: 146°C
To summarize the above, configurations according to the present invention and variations thereof will be described below.

[1] An adhesive composition, comprising polyorganosilsesquioxane (A) including a siloxane constituent unit, wherein the siloxane constituent unit includes at least a constituent unit represented by Formula (1),

$$R^1SiO_{3/2} \qquad (1)$$

in Formula (1), $R^1$ represents a group containing a radically polymerizable group;
a proportion of the constituent unit represented by Formula (1) and a constituent unit represented by Formula (2), relative to a total amount (100 mol%) of siloxane constituent units included in the polyorganosilsesquioxane (A), is from 55 to 100 mol%,

$$R^1SiO_{2/2}(OR^2) \qquad (2)$$

in Formula (2), $R^1$ is as defined above, and $R^2$ is a hydrogen atom or an alkyl group having from 1 to 4 carbons, and the polyorganosilsesquioxane (A) has a number average molecular weight from 1500 to 50000 and a molecular weight dispersity (weight average molecular weight/number average molecular weight) from 1.0 to 4.0.
[2] The adhesive composition according to [1], wherein the polyorganosilsesquioxane (A) further includes a constituent unit represented by Formula (1-1),

$R^3SiO_{3/2}$ (1-1)

in Formula (1-1), $R^3$ is a substituted or unsubstituted aryl group, a substituted or unsubstituted aralkyl group, a substituted or unsubstituted cycloalkyl group, a substituted or unsubstituted alkyl group, or a substituted or unsubstituted alkenyl group.

[3] The adhesive composition according to [1] or [2], wherein the radically polymerizable group is a (meth)acryloyloxy group.

[4] The adhesive composition according to any one of [1] to [3], further comprising a radically polymerizable compound (B) other than the polyorganosilsesquioxane (A).

[5] The adhesive composition according to any one of [1] to [4], further comprising a radical polymerization initiator (C).

[6] The adhesive composition according to any one of [1] to [5], further comprising a silane coupling agent (D) represented by Formula (d).

[7] The adhesive composition according to [5] or [6], comprising a thermal radical polymerization initiator as the radical polymerization initiator (C) and further comprising from 0.1 to 10.0 parts by weight of an antioxidant (E) relative to 1 part by weight of the thermal radical polymerization initiator.

[8] The adhesive composition according to any one of [5] to [7], comprising a thermal radical polymerization initiator as the radical polymerization initiator (C) and further comprising from 0.05 to 1.0 parts by weight of a chain transfer agent (F) relative to 1 part by weight of the thermal radical polymerization initiator.

[9] A cured product of the adhesive composition described in any one of [1] to [8].

[10] A method of producing a cured product including subjecting the adhesive composition described in any one of [1] to [8] to a heat treatment in which a curing temperature is changed stepwise, wherein

a degree of cure at the end of a first stage of the heat treatment is equal to or less than 85%, and a degree of cure is greater than 85% after a second or later stage of the heat treatment.

[11] A substrate with an adhesive layer, wherein the adhesive layer is formed on the substrate and formed from a solidified product of the adhesive composition described in any one of [1] to [8].

[12] A laminate having a structure in which two or more substrates are stacked with a cured product of the adhesive composition described in any one of [1] to [8] interposed therebetween.

[13] A device including the laminate described in [12].

Industrial Applicability

When a thermoset adhesive that needs to be heated at an elevated temperature is used, an adherend may be damaged by the heat. However, the adhesive composition according to the present invention can be cured at a low temperature and form a cured product having excellent heat resistance, insulating property, crack resistance, and adhesiveness. Therefore, the adhesive composition according to the present invention is suitable for use in bonding components for electronic materials.

Reference Signs List

A Section in which weight change is not observed

B Section in which drastic decrease in weight is observed

**Claims**

**1.** An adhesive composition, comprising polyorganosilsesquioxane (A) including a siloxane constituent unit, wherein the siloxane constituent unit includes at least a constituent unit represented by Formula (1),

$R^1SiO_{3/2}$ (1)

in Formula (1), $R^1$ represents a group containing a radically polymerizable group;

a proportion of the constituent unit represented by Formula (1) and a constituent unit represented by Formula (2), relative to a total amount (100 mol%) of siloxane constituent units included in the polyorganosilsesquioxane (A), is 55 to 100 mol%,

$R^1SiO_{2/2}(OR^2)$ (2)

in Formula (2), $R^1$ is as defined above, and $R^2$ is a hydrogen atom or an alkyl group having from 1 to 4 carbons; and the polyorganosilsesquioxane (A) has a number average molecular weight from 1500 to 50000 and a molecular weight dispersity (weight average molecular weight/number average molecular weight) from 1.0 to 4.0.

**2.** The adhesive composition according to claim 1, wherein the polyorganosilsesquioxane (A) further comprises a constituent unit represented by Formula (1-1),

$$R^3SiO_{3/2} \qquad (1\text{-}1)$$

in Formula (1-1), $R^3$ is a substituted or unsubstituted aryl group, a substituted or unsubstituted aralkyl group, a substituted or unsubstituted cycloalkyl group, a substituted or unsubstituted alkyl group, or a substituted or unsubstituted alkenyl group.

**3.** The adhesive composition according to claim 1 or 2, wherein the radically polymerizable group is a (meth)acryloyloxy group.

**4.** The adhesive composition according to any one of claims 1 to 3, further comprising a radically polymerizable compound (B) other than the polyorganosilsesquioxane (A).

**5.** The adhesive composition according to any one of claims 1 to 4, further comprising a radical polymerization initiator (C).

**6.** The adhesive composition according to any one of claims 1 to 5, further comprising a silane coupling agent (D) represented by Formula (d),

[Chem. 1]

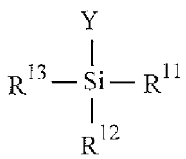

(d)

in Formula (d), $R^{11}$ to $R^{13}$ are the same or different and each represent an OR group or an R group, and at least one of $R^{11}$ to $R^{13}$ is an OR group, where R is a monovalent hydrocarbon group optionally having a substituent; and Y is a group containing a radically polymerizable group.

**7.** The adhesive composition according to claim 5 or 6, comprising a thermal radical polymerization initiator as the radical polymerization initiator (C) and further comprising from 0.1 to 10.0 parts by weight of an antioxidant (E) relative to 1 part by weight of the thermal radical polymerization initiator.

**8.** The adhesive composition according to any one of claims 5 to 7, comprising a thermal radical polymerization initiator as the radical polymerization initiator (C) and further comprising from 0.05 to 1.0 parts by weight of a chain transfer agent (F) relative to 1 part by weight of the thermal radical polymerization initiator.

**9.** A cured product of the adhesive composition described in any one of claims 1 to 8.

**10.** A method of producing a cured product comprising subjecting the adhesive composition described in any one of claims 1 to 8 to a heat treatment in which a curing temperature is changed stepwise, wherein
a degree of cure at the end of a first stage of the heat treatment is equal to or less than 85%, and a degree of cure is greater than 85% after a second or later stage of the heat treatment.

**11.** A substrate with an adhesive layer, wherein the adhesive layer is formed on the substrate and formed from a solidified product of the adhesive composition described in any one of claims 1 to 8.

**12.** A laminate having a structure in which two or more substrates are stacked with a cured product of the adhesive

composition described in any one of claims 1 to 8 interposed therebetween.

**13.** A device comprising the laminate described in claim 12.

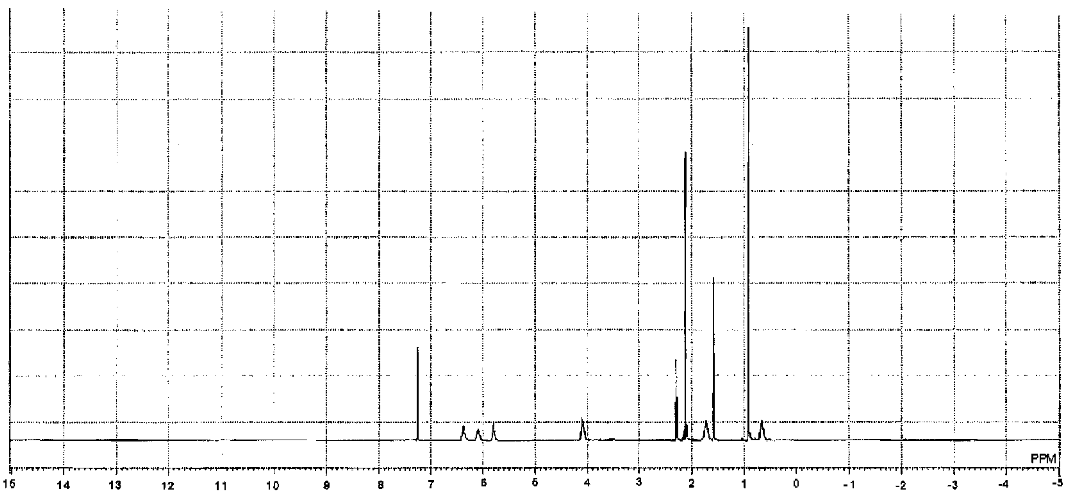


FIG. 1

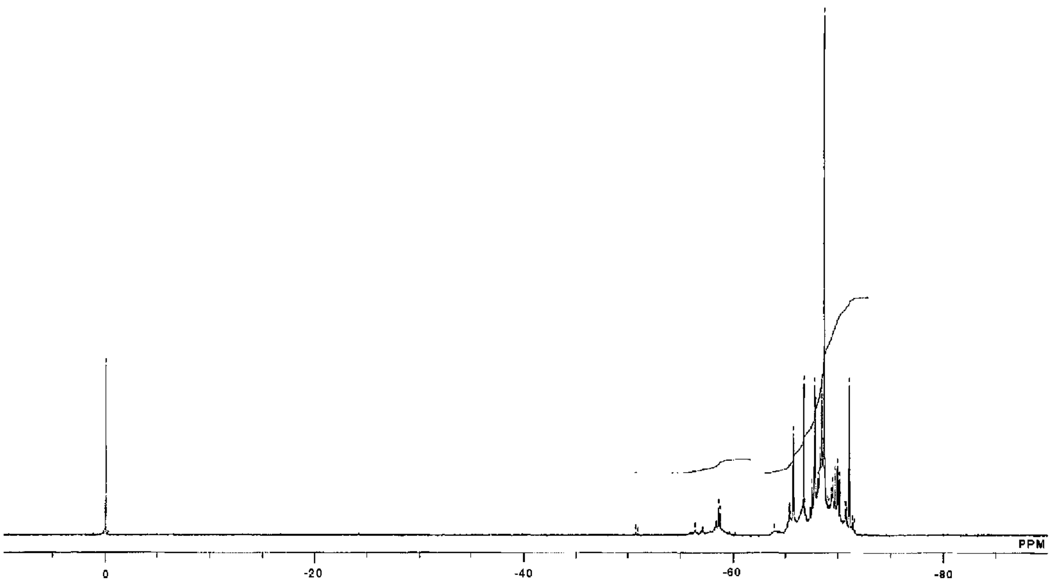


FIG. 2

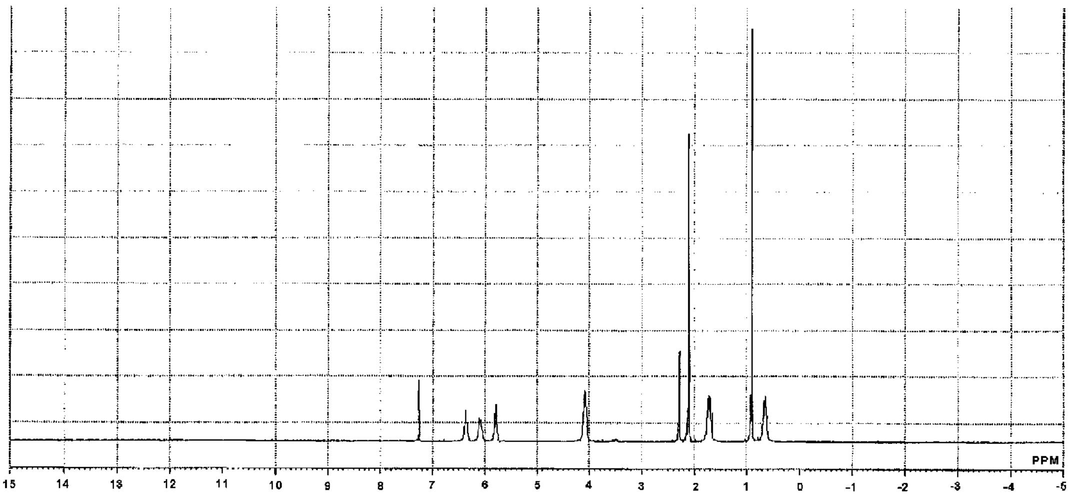


FIG. 3

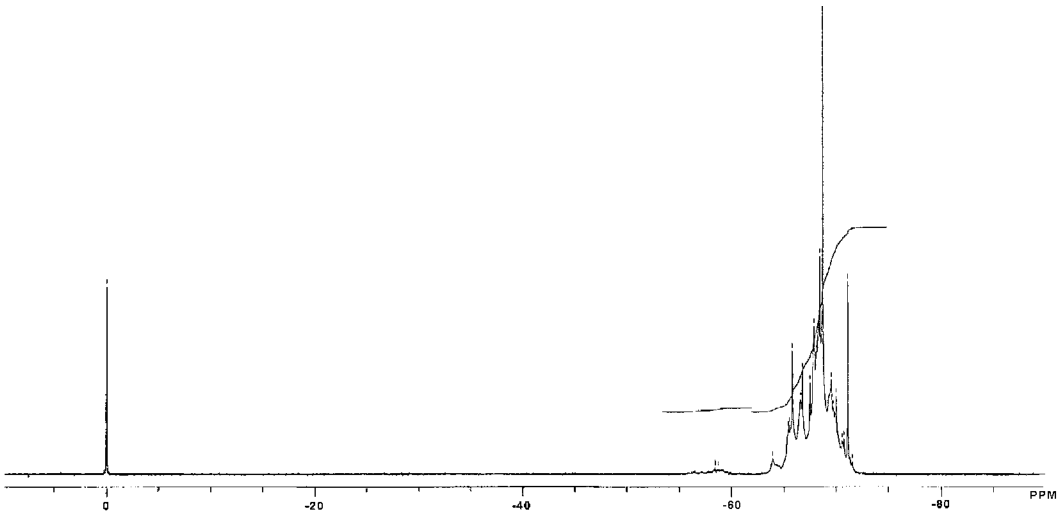


FIG. 4

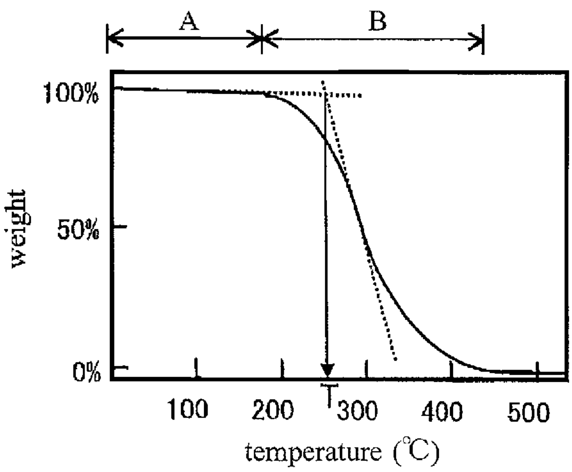


FIG. 5

## INTERNATIONAL SEARCH REPORT

International application No.
PCT/JP2018/018998

A. CLASSIFICATION OF SUBJECT MATTER
Int.Cl. C09J183/07(2006.01)i, B32B27/00(2006.01)i, C08G77/20(2006.01)i, C09J5/06(2006.01)i, C09J11/06(2006.01)i

According to International Patent Classification (IPC) or to both national classification and IPC

B. FIELDS SEARCHED

Minimum documentation searched (classification system followed by classification symbols)
Int.Cl. C09J183/07, B32B27/00, C08G77/20, C09J5/06, C09J11/06

Documentation searched other than minimum documentation to the extent that such documents are included in the fields searched

| | |
|---|---|
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | WO 2015/030116 A1 (DENKI KAGAKU KOGYO KABUSHIKI KAISHA) 05 March 2015, claims, paragraphs [0001], [0004], [0039], [0045]-[0047], [0049]-[0050], [0054], [0059]-[0061], [0063]-[0077], tables 1-2, examples 1-16 & TW 201518418 A | 1-13 |

☒ Further documents are listed in the continuation of Box C.

☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 06 July 2018 (06.07.2018) | 24 July 2018 (24.07.2018) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No. PCT/JP2018/018998

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2015-096559 A (DENKI KAGAKU KOGYO KABUSHIKI KAISHA) 21 May 2015, claims, paragraphs [0001]-[0009], [0029], [0036]-[0041], [0046]-[0048], [0050]-[0061], tables 1-2, examples 1-10 & WO 2013/129565 A1 & TW 201336895 A | 1-13 |
| Y | WO 2016/204114 A1 (DAICEL CORPORATION) 22 December 2016, claims, paragraphs [0059]-[0062], [0190] & CN 107683299 A & KR 10-2018-0018530 A | 1-13 |
| Y | JP 2017-008148 A (DAICEL CORPORATION) 12 January 2017, claims, paragraphs [0063]-[0066], [0201] (Family: none) | 1-13 |
| A | JP 2016-511784 A (DOW CORNING CORPORATION) 21 April 2016, claims, paragraphs [0149]-[0193] & US 2015/0376481 A1, claims, paragraphs [0181]-[0222] & WO 2014/124364 A1 & EP 002954023 A1 & CN 104968749 A & KR 10-2015-0118139 A | 1-13 |
| A | JP 2014-177632 A (LINTEC CORP.) 25 September 2014, claims, examples 1-9 & US 2008/0249271 A1, claims, examples 1-9 & KR 10-2008-0080942 A | 1-13 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2017098511 A
- JP 2017098513 A
- JP 2009279840 A
- JP 2010226060 A